# NEW EUROPEAN PATENT SPECIFICATION

(11) **EP 1 788 048 B2**
(45) Date of publication and mention of the opposition decision: **06.01.2016**
(45) Mention of the grant of the patent: 06.10.2010
(21) Application number: 05770522.0
(22) Date of filing: 10.08.2005
(51) Int. Cl.: C09D 163/00, B05D 5/00, B05D 7/24, C09D 5/00, C09D 5/08, C09D 5/16, C09D 123/28, C09D 127/06, C09D 133/00, C09D 157/02, C09D 161/00, C09D 161/04, C09D 175/04, C09D 201/02, C09D 201/10, C09D 4/00

(54) **HIGH-SOLID ANTICORROSIVE COATING COMPOSITION, HIGH-SOLID RAPIDLY-CURABLE ANTICORROSIVE COATING COMPOSITION, METHOD OF COATING SHIP OR THE LIKE, HIGH-SOLID ANTICORROSIVE FILM AND RAPIDLY CURED HIGH-SOLID ANTICORROSIVE FILM OBTAINED, AND COATED SHIP AND UNDERWATER STRUCTURE COATED WITH THESE COATING FILMS**
HOCHFESTE, ANTIKORROSIVE BESCHICHTUNGSZUSAMMENSETZUNG, HOCHFESTE, SCHNELLHÄRTENDE, ANTIKORROSIVE BESCHICHTUNGSZUSAMMENSETZUNG, BESCHICHTUNGSVERFAHREN FÜR EIN SCHIFF ODER ÄHNLICHES, HOCHFESTER, ANTIKORROSIVER FILM UND DARAUS GEWONNENER SCHELLHÄRTENDER, HOCHFESTER, ANTIKORROSIVER FILM SOWIE BESCHICHTETES SCHIFF UND MIT DIESEM BESCHICHTUNGSFILM BESCHICHTETE UNTERWASSERSTRUKTUR
COMPOSITION DE REVETEMENT ANTICORROSION A HAUTE TENEUR EN SOLIDES, COMPOSITION DE REVETEMENT ANTICORROSION A DURCISSEMENT RAPIDE A HAUTE TENEUR EN SOLIDES, PROCEDE DE REVETEMENT DE NAVIRE OU ANALOGUE, FILM ANTICORROSION A HAUTE TENEUR EN SOLIDES ET FILM ANTICORROSION A HAUTE TENEUR EN SOLIDES A DURCISSEMENT RAPIDE OBTENU

(30) Priority: 10.08.2004 JP 2004233390
(43) Date of publication of application: 23.05.2007
(73) Proprietor: CHUGOKU MARINE PAINTS, LTD., Ohtake-shi Hiroshima 739-0652 (JP)
(72) Inventor: NIIMOTO, Jyunji, Ohtake-shi, Hiroshima 7390652 (JP); KANAMEDA, Soushi, Ohtake-shi, Hiroshima 7390652 (JP); SUMIDA, Tomohisa, Ohtake-shi, Hiroshima 7390652 (JP); MIYACHI, Yukio, Ohtake-shi, Hiroshima 7390652 (JP); TANAKA, Hideyuki, Ohtake-shi, Hiroshima 7390652 (JP)
(74) Representative: Hoffmann Eitle
(86) International application number: PCT/JP2005/014693
(87) International publication number: WO 2006/016625

(56) References cited:
- EP-A- 1 069 167
- JP-A- 9 263 713
- JP-A- 10 211 464
- JP-A- 10 259 351
- JP-A- 2000 001 645
- JP-A- 2000 001 645
- JP-A- 2000 026 769
- JP-A- 2000 026 769
- JP-A- 2000 037 658
- JP-A- 2000 037 659
- JP-A- 2000 038 540
- JP-A- 2000 129 168
- JP-A- 2001 002 986
- JP-A- 2001 279 167
- JP-A- 2002 080 564
- JP-A- 2002 080 564
- JP-A- 2003 171 611
- JP-A- 2003 171 611
- JP-A- 2005 015 572

## Description

### TECHNICAL FIELD

The present invention relates to a high-solids anticorrosive coating composition, a high-solids rapid-curing anticorrosive coating composition, a method for painting the exterior of a ship using these anticorrosive coating compositions, a high-solids anticorrosive coating film and a high-solids anticorrosive coating film formed from these anticorrosive coating compositions, a painted ship coated with these anticorrosive coating films, a painted ship coated with a coating film formed by the method for painting the exterior of a ship, and an underwater structure coated with the anticorrosive coating film. More particularly, the invention relates to a high-solids anticorrosive coating composition of a tar-free epoxy anticorrosive paint, which is excellent in low-solvent-content property, low-temperature curability, anticorrosion property and interlaminar adhesion and can exhibits anticorrosion property nearly equal to that of a conventional tar-based epoxy anticorrosive paint.

### BACKGROUND ART

In conventional painting of ships, various parts of a ship, such as bottom, boot topping, outside board, exposed deck, void space, cofferdam, engine room, cargo hold, cargo tank and water ballast tank, are individually coated with anticorrosive paints of different formulations and brands, then on the resulting film of the anticorrosive paint a binder coat is sometimes formed, and thereon a tin-free antifouling paint or a finish coating such as a finish coating for deck is applied.

A ship is build by manufacturing individual blocks and assembling them, so that the painting work needs to be carried out for each block from the viewpoint of workability. Also in the individual blocks, it is necessary to carry out painting of their parts using different coatings for individual parts, so that the painting work becomes extremely complicated, and there are many painting failures. In such a painting process, further, the interval between uses of the paints (coatings) becomes long in many cases, and before the next use, general epoxy coatings of two-liquid reaction curing type are cured, so that the coatings have been often wasted.

If a universal primer (single primer) having excellent weathering resistance, adhesion to various finish coatings and anticorrosion property is used in such a shipbuilding process, single primer coating can be carried out on all the blocks having been subjected to surface treatment, and therefore, complicatedness, painting failure, waste of coatings, etc. are removed.
As such a universal primer, an anticorrosive coating composition comprising an epoxy resin, a vinyl chloride-based copolymer and a curing agent composed of polyamide or its modification product has been developed (for example, patent documents 1 and 2).

In this anticorrosive coating composition, however, an epoxy resin and an amine-based curing agent in the form of solids are employed. Therefore, the solids content (volume solid) in the paint composition becomes about 60% and the content of the solvent is the rest, i.e., about 40%, and is high, so that it is insufficient to the VOC regulation (regulation of total emission of solvent). That is to say, because the universal primer is used as a single primer for all the blocks and their painting parts, the total amount of the solvent becomes large, and this exert influence on the amount of the solvent liberated into the environment. Accordingly, low-solvent-content property has been desired from the viewpoint of environmental protection. From such a viewpoint and also from the VOC regulation (regulation of total emission of solvent), high solids (solids content: 72 to 100% by volume) are preferable because the solvent content is decreased, and the evil influence on the environment is reduced.

In order that painting of ships can be carried out even in the winter season or in the cold district, the anticorrosive paint needs to be readily cured at low temperatures. The conventional anticorrosive paints, however, have different curing rates depending upon temperatures, so that it is necessary to use two kinds of paints having different formulations, namely, a paint for the summer season and a paint for the winter season. In order to use a certain paint as a paint for the winter season, addition of a curing accelerator such as tertiary amine has been heretofore carried out, and the resulting paint for the winter season is excellent in the low-temperature curability and has no problem in practical use, but a coating film of the paint tends to be lowered in adhesion to various finish coating films, anticorrosion property, etc.

As a high-solids epoxy-based anticorrosive paint that solves the above problems, there has been developed an anticorrosive coating composition comprising a main agent component containing a liquid epoxy resin of bisphenol A type and an amine-based curing agent that uses aliphatic polyamine, alicyclic polyamine, aromatic polyamine, polyamide and the like singly or in combination (for example, patent document 3).
This high-solids anticorrosion paint has a solids content of about 80% by weight and has a solvent content of about 20% by weight, so that it has excellent low-solvent-content property and is useful as a countermeasure to the VOC regulation. Further, in order to improve curability at low temperatures in the winter season, there have been used Mannich type curing agents formed by Mannich condensation reaction of phenols, aldehydes and amine compounds, adducts thereof, Mannich type curing agents (Phenolkamine) similarly formed by Mannich condensation reaction of cardanol, aldehydes and amine compounds, adducts thereof, etc. By the use of these Mannich type curing agents, anticorrosive paints having excellent anticorrosion property and low-temperature curability are obtained.

However, even if these Mannich type curing agents are used, improvements should be made in weathering resistance, adhesion to various finish coating films, etc. required for a universal primer, in case of the formulation of the anticorrosive paint described in the patent document 3.
In the case where an anticorrosive paint is applied and then a finish coating is applied on the resulting coating film, this finish coating operation is usually carried out at a given interval (time interval). In case of the above anticorrosive paints, however, they exhibit poor adhesion to the finish coating film if the interval is long. If the interval before the finish coating operation is tried to be shortened, there reside problems that the process becomes complicated and working failures take place.
Patent document 1: Japanese Patent Laid-Open Publication No. 211464/1998
Patent document 2: Japanese Patent Laid-Open Publication No. 259351/1998
Patent document 3: Japanese Patent Laid-Open Publication No. 80564/2002

### DISCLOSURE OF THE INVENTION

### PROBLEMS TO BE SOLVED BY THE INVENTION

The present invention is intended to solve such problems associated with the prior art as described above, and it is an object of the present invention to provide a high-solids anticorrosive coating composition, which is a composition of high-solids type (solids content: 72 to 100% by volume), has a low content of a solvent and excellent low-solvent-content property, is excellent in anticorrosion property, weathering resistance and adhesion to various finish coating films, is not deteriorated in the adhesion to the finish coating films even if the interval before the finish coating operation is long, and is applicable to various painting parts of a ship by merely using one kind of an anticorrosive paint even if the type and the amount (formulation, quantity ratio) of the anticorrosive paint are not changed for each part of a ship.

It is another object of the invention to provide a high-solids anticorrosive coating composition of all-season type, which is employable irrespective of seasons and temperatures because rapid drying and a sufficient pot life are secured, and to provide a high-solids anticorrosive coating composition of low-temperature curing type having particularly excellent curability at low temperatures (not higher than 0°C).

It is a further object of the invention to provide a tar-free anticorrosive paint, which has a high content of solids and a low content of a solvent in the painting process, can realize coating operations of as many as twice a day (1 day 2 coatings, 2 coat/day), is excellent in high-solids property, rapid curability and low-temperature curability, can readily form a thick coating film, can improve working efficiency in the painting process and working environment for workers, can provide a coating film having excellent anticorrosion property and interlaminar adhesion, can exhibit anticorrosion property nearly equal to that of a film of a conventional tar-based epoxy anticorrosive paint, and can be favorably used for various parts of a ship, such as a cargo tank and a ballast tank.

It is a still further object of the invention to provide a high-solids anticorrosive coating film formed from the above anticorrosive coating composition, a painted ship coated with the anticorrosive coating film, and a painted ship coated with a coating film formed by the process for painting the exterior of a ship.

### MEANS TO SOLVE THE PROBLEMS

The low-temperature curing type high-solids anticorrosive coating composition according to the present invention is a paint composition comprising:
(A) a main agent component comprising
   (a1) an epoxy resin and
   (a3) a polymerizable (meth)acrylate monomer, and
(B) a curing agent component comprising
   (b1) an adduct of norbornanediamine with an epoxy resin,
wherein the main agent component (A) and/or the curing agent component (B) comprises at least one of the following additive (a2) and the following coating film modifier (ab):
(a2) at least one additive selected from the group consisting of
   (a2-1) a reactive diluent having an epoxy group and
   (a2-2) a dimer acid modified epoxy resin and/or an epoxy resin in which an aromatic ring is hydrogenated,
and
(ab) at least one coating film modifier selected from the group consisting of a petroleum resin, a xylene resin, a coumarone resin, a terpene phenol resin and a vinyl chloride-based copolymer, and
   wherein in 100 parts by weight of the main agent (A) the epoxy resin (a1) is contained as a solid in an amount of 5 to 50 parts by weight, the reactive diluent (a2-1) is contained in an amount of 0 to 20 parts by weight, the epoxy resin (a2-2) is contained as a solid in an amount of 0 to 50 parts by weight, the coating film modfier (ab) is contained in an amount of 0 to 10 parts by weight, and the polymerizable (meth)acrylate monomer (a3) is contained in an amount of 0.2 to 5 parts by weight.

In the compositions of the invention, the main agent component (A) further comprises (a3) a polymerizable (meth)acrylate monomer in addition to the epoxy resin (a1) and "at least one additive (a2) selected from the group consisting of the reactive diluent (a2-1) having an epoxy group and the modified epoxy resin (a2-2)".
In the compositions of the invention, it is preferable that the main agent component (A) comprises the epoxy resin (a1), the additive (a2) or the coating film modifier (ab), and the polymerizable (meth)acrylate monomer (a3) (as shown in, for example, Examples 1 to 15 of Tables 1 and 2), or the main agent component (A) comprises the epoxy resin (a1), the additive (a2), and the polymerizable (meth)acrylate monomer (a3) (as shown in, for example, Examples 16 to 18 of Table 7), and the curing agent component (B) comprises the coating film modifier (ab).

In the high-solids anticorrosive coating compositions of the invention, the solids content of the coating film-forming component in the anticorrosive coating composition is in the range of preferably 72 to 100% by volume, particularly preferably 75 to 85% by volume.
A primer composition according to the present invention comprises any one of the above high-solids anticorrosive coating composition.

The high-solids rapid-curing anticorrosive coating composition according to the present invention is a paint composition as defined above, inter alia comprising:
(A) a main agent component comprising (a1) an epoxy resin, and
(B) a curing agent component comprising (b1) an alicyclic amine-based curing agent,
wherein the main agent component (A) and/or the curing agent component (B) comprises at least one of the aforesaid additive (a2) and the aforesaid coating film modifier (ab), and a low-boiling point solvent having a boiling point of not higher than 150°C at atmospheric pressure is not substantially contained in the paint composition.

In any of the high-solids anticorrosive compositions and the rapid-curing anticorrosive coating compositions of the invention, the main agent component (A) further comprises (a3) a polymerizable (meth)acrylate monomer in addition to the epoxy resin (a1) and "at least one additive (a2) selected from the group consisting of the reactive diluent (a2-1) having an epoxy group and the modified epoxy resin (a2-2)".

In these high-solids rapid-curing anticorrosive coating compositions, the solids content of the coating film-forming component in the anticorrosive coating composition is preferably in the range of 72 to 100% by volume. In the high-solids rapid-curing anticorrosive coating compositions of the invention, the main agent component (A) and/or the curing agent component (B) preferably contains a high-boiling point solvent having a boiling point of higher than 150°C at atmospheric pressure.
In any of the high-solids anticorrosive coating compositions and the high-solids rapid-curing anticorrosive coating compositions of the invention, the main agent component (A) preferably further contains at least one filler selected from the group consisting of barium sulfate, potash feldspar and titanium white.

In any of the high-solids anticorrosive coating compositions and the high-solids rapid-curing anticorrosive coating compositions of the invention, the main agent component (A) preferably further contains talc.
In any of the high-solids anticorrosive coating compositions and the high-solids rapid-curing anticorrosive coating compositions of the invention, the epoxy resin (a1) is preferably at least one resin selected from the group consisting of a bisphenol A type epoxy resin, a bisphenol AD type epoxy resin and a bisphenol F type epoxy resin.

In any of the high-solids anticorrosive coating compositions and the high-solids rapid-curing anticorrosive coating compositions of the invention, the reactive diluent (a2-1) having an epoxy group is preferably at least one substance selected from the group consisting of phenyl glicidyl ether, alkyl glycidyl ether, glycidyl ester of versatic acid, α-olefin epoxide, 1,6-hexanediol diglycidyl ether, neopentyl glycol diglycidyl ether, trimethylolpropane triglycidyl ether and alkylphenyl glycidiyl ether.

In any of the high-solids anticorrosive coating compositions and the high-solids rapid-curing anticorrosive coating compositions of the invention, the modified epoxy resin (a2-2) is preferably a dimer acid modified epoxy resin and/or an epoxy resin in which an aromatic ring is hydrogenated.
In any of the high-solids anticorrosive coating compositions and the high-solids rapid-curing anticorrosive coating compositions of the invention, the polymerizable (meth)acrylate monomer (a3) is preferably a monofunctional or polyfunctional aliphatic (meth)acrylate monomer and/or a monofunctinal or polyfunctional aromatic (meth)acrylate monomer.

In any of the high-solids anticorrosive coating compositions and the high-solids rapid-curing anticorrosive coating compositions of the invention, the alicyclic amine-based curing agent (b1) is preferably an adduct of norbornanediamine with an epoxy resin.

The high-solids rapid-curing anticorrosive coating composition of the invention preferably forms a coating film having a curing time of not more than 8 hours and preferably has a pot life of 10 minutes to 40 minutes.
The first method for painting the exterior of a ship according to the present invention is a method comprising:
applying the above-mentioned same high-solids anticorrosive coating composition as a primer onto (i) a bottom of a ship, or (i) a bottom and (ii) a boot topping of a ship, and
then applying an organotin-free hydrolyzable antifouling paint onto the primer coating film.

The second method for painting the exterior of a ship according to the present invention is a method comprising:
applying the above-mentioned same high-solids anticorrosive coating composition as a primer onto the whole of an outside plating of a ship including (i) a bottom, (ii) a boot topping and (iii) an outside board, and
then applying an organotin-free hydrolyzable antifouling paint onto the primer coating film formed on the bottom (i) or the bottom (i) and the boot topping (ii) of the primer treated outside plating.

The third method for painting the exterior of a ship according to the present invention is a method comprising:
applying the above-mentioned same high-solids anticorrosive coating composition as a primer onto the whole of an outside plating of a ship including (i) a bottom, (ii) a boot topping and (iii) an outside board,
then applying an organotin-free hydrolyzable antifouling paint onto the primer coating film formed on the bottom (i) or the bottom (i) and the boot topping (ii) of the primer treated outside plating and applying a finish coating for outside board onto the outside board (iii), and
if necessary, further applying a finish coating for boot topping onto the boot topping (ii).

In the method for painting the exterior of a ship according to the invention, it is preferable that the finish coating for outside board is at least one coating selected from a urethane-based coating, an epoxy-based coating, an acrylic-based coating and a chlorinated polyolefin-based coating, and the finish coating for boot topping is at least one coating selected from a urethane-based coating, an epoxy-based coating, an acrylic-based coating, a chlorinated polyolefin-based coating and an organotin-free hydrolyzable antifouling paint.

In the method for painting the exterior of a ship according to the invention, the organotin-free hydrolyzable antifouling paint contains a trialkylsilyl ester copolymer containing constituent units derived from trialkylsilyl ester of a polymerizable unsaturated carboxylic acid in amounts of usually 10 to 65% by weight, preferably 20 to 65% by weight, and having a number-average molecular weight (Mn) of 1000 to 50000.
In the method for painting the exterior of a ship according to the invention, the organotin-free hydrolyzable antifouling paint preferably contains a vinyl-based resin in which an organic acid is bonded to at least one side chain end through an intermolecular bond owing to a metal ion (metal salt bond).

The method for painting the exterior of a ship according to the present invention is a method comprising:
applying the above-mentioned same high-solids anticorrosive coating composition as a primer onto the whole of an outside plating area (A) of a ship constituted of (i) a bottom, (ii) a boot topping and (iii) an outside board and the whole of an exposed area (B) of a ship present on the upper side of a deck and constituted of (iv) a deck and (v) a superstructure,
then applying an organotin-free hydrolyzable antifouling paint onto the primer coating film formed on the bottom (i) or the bottom (i) and the boot topping (ii), applying a finish coating for outside board onto the outside board (iii), and applying a finish coating for deck onto the deck (iv).

The method of the invention preferably comprises:
applying the above-mentioned same high-solids anticorrosive coating composition as a primer onto the whole of an outside plating area (A) of a ship constituted of (i) a bottom, (ii) a boot topping and (iii) an outside board and the whole of an exposed area (B) of a ship present on the upper side of a deck and constituted of (iv) a deck and (v) a superstructure,
then applying an organotin-free hydrolyzable antifouling paint onto the primer coating film formed on the bottom (i) or the bottom (i) and the boot topping (ii), applying a finish coating for outside board onto the outside board (iii), applying a finish coating for deck onto the deck (iv), and applying a finish coating for superstructure onto the superstructure (v).

The method of the invention preferably comprises:
applying the above-mentioned same high-solids anticorrosive coating composition as a primer onto the whole of an outside plating area (A) of a ship constituted of (i) a bottom, (ii) a boot topping and (iii) an outside board and the whole of an exposed area (B) of a ship present on the upper side of a deck and constituted of (iv) a deck and (v) a superstructure,
then applying an organotin-free hydrolyzable antifouling paint onto the primer coating film formed on the bottom (i) or the bottom (i) and the boot topping (ii), applying a finish coating for outside board onto the outside board (iii), applying a finish coating for deck onto the deck (iv), and if necessary, applying a finish coating for boot topping onto the boot topping (ii).

In the method for painting the exterior of a ship according to the invention, it is preferable that the finish coating for outside board is at least one coating selected from a urethane-based coating, an epoxy-based coating, an acrylic-based coating and a chlorinated polyolefin-based coating, and the finish coating for deck is at least one coating selected from a urethane-based coating, an epoxy-based coating, an acrylic-based coating and a chlorinated polyolefin-based coating.

In the method for painting the exterior of a ship according to the invention, it is preferable that the finish coating for outside board is at least one coating selected from a urethane-based coating, an epoxy-based coating, an acrylic-based coating and a chlorinated polyolefin-based coating, the finish coating for deck is at least one coating selected from a urethane-based coating, an epoxy-based coating, an acrylic-based coating and a chlorinated polyolefin-based coating, and the finish coating for superstructure is at least one coating selected from a urethane-based coating, an epoxy-based coating, an acrylic-based coating and a chlorinated polyolefin-based coating.

In the method for painting the exterior of a ship according to the invention, the organotin-free hydrolyzable antifouling paint is preferably an organotin-free hydrolyzable antifouling paint containing, as a binder component, at least one hydrolyzable resin selected from the group consisting of (i) a trialkylsilyl ester copolymer, (ii) a resin wherein an organic acid is bonded to at least one side chain end of a vinyl-based resin through an intermolecular bond owing to a metal ion (metal salt bond), and (iii) an unsaturated carboxylic acid metal salt-based copolymer.

In the method for painting the exterior of a ship according to the invention, it is preferable that the trialkylsilyl ester copolymer (i) contained in the organotin-free hydrolyzable antifouling paint contains constituent units derived from trialkylsilyl ester of a polymerizable unsaturated carboxylic acid in amounts of 10 to 65% by weight, preferably 20 to 65% by weight, and has a number-average molecular weight (Mn, measured by GPC, in terms of polystyrene, the same shall apply hereinafter) of 1000 to 50000.

The painting method with a high-solids rapid-curing anticorrosive coating composition according to the present invention comprises forcedly feeding the main agent component (A) and the curing agent component (B) for constituting any one of the above high-solids rapid-curing anticorrosive coating compositions to a static mixer through different feed pipes, mixing them, then guiding the resulting high-solids rapid-curing anticorrosive coating composition to a spray gun and coating a base surface with the composition.

The first high-solids anticorrosive coating film according to the present invention is formed from any one of the above high-solids anticorrosive coating compositions.
The second high-solids rapid-cured anticorrosive coating film according to the present invention is formed from any one of the above high-solids rapid-curing anticorrosive coating compositions.
The first painted ship according to the present invention is a ship coated with a high-solids anticorrosive coating film (first coating film) formed from any one of the above high-solids anticorrosive coating compositions.

The first painted ship of the invention is preferably a ship coated with a coating film formed by any one of the above methods for painting the exterior of a ship.
The exposed deck, the cargo tank and the ballast tank according to the present invention are each coated with a high-solids anticorrosive coating film (first coating film) formed from any one of the above high-solids anticorrosive coating compositions or a high-solids rapid-cured anticorrosive coating film (second coating film) formed from any one of the above high-solids rapid-curing anticorrosive coating compositions.

The first underwater structure according to the present invention is coated with a high-solids anticorrosive coating film formed from any one of the above high-solids anticorrosive coating compositions.
The second underwater structure according to the present invention is coated with a high-solids rapid-cured anticorrosive coating film formed from any one of the above high-solids rapid-curing anticorrosive coating compositions.

The high-solids anticorrosive coating composition set according to the present invention comprises:
a unit comprising the aforesaid main agent component, and
a unit comprising the aforesaid curing agent component corresponding to the unit comprising the main agent component.

### EFFECT OF THE INVENTION

Because the high-solids anticorrosive coating composition of the invention has a high content of solids and has excellent low-solvent-content property, it is effective from the viewpoints of improvement in hygiene of painting workers and environmental protection. Further, the high-solids anticorrosive coating composition of the invention is applicable to various parts of a ship by merely using one kind of an anticorrosive paint even if the type and the amount of the anticorrosive paint are not changed for each part of a ship, and a coating film obtained from this anticorrosive paint is excellent in anticorrosion property, weathering resistance and adhesion to various finish coating films and is not deteriorated in the adhesion to the finish coating films even if the interval before the finish coating operation is long.

In addition to the above effects, the all-season type high-solids anticorrosive coating composition of the invention is rapidly dried after application and secures a sufficient pot life, so that it can be used irrespective of seasons and temperatures.
In addition to the above effects, the low-temperature curing type high-solids anticorrosive coating composition of the invention has excellent curability at low temperatures (not higher than 0°C), so that it can be favorably used even in the winter season and on the low-temperature occasions.

In particular, the high-solids rapid-curing anticorrosive coating composition of the invention has the following advantages: it is a tar-free anticorrosive paint; it has a high content of solids and a low content of a solvent in the painting process; it has such excellent high-solids property and rapid curability that coating operations of as many as twice a day (1 day 2 coatings, 2 coat/day) can be realized; it has excellent low-temperature curability and a proper pot life; a coating film of desired thickness can be readily obtained in a short painting time with a small number of coating times by devising a painting method to increase efficiency of coating operations; and the resulting coating film has excellent anticorrosion property and interlaminer adhesion, exhibits anticorrosion property nearly equal to that of a coating film of a conventional tar-based epoxy anticorrosive paint, and can be favorably used for various parts of a ship, such as a cargo tank and a ballast tank.

The high-solids anticorrosive coating composition set of the invention has excellent storage stability, can secure a proper pot life by mixing a main agent component unit with a curing agent unit at the time of painting, can provide a paint exhibiting the above-mentioned high-solids property and rapid curability, and can efficiently form a coating film having excellent anticorrosion property and interlaminar adhesion, having a single layer structure or a multilayer structure and having a desired thickness, by coating the desired parts with the paint so as to give the above layer structure.

### BEST MODE FOR CARRYING OUT THE INVENTION

The high-solids anticorrosive coating composition (first paint) and the high-solids rapid-curing anticorrosive coating composition of the invention (these are together sometimes referred to as "high-solids anticorrosion paint composition" or "anticorrosive paint" simply hereinafter), the method for painting the exterior of a ship using these paint compositions, the resulting high-solids anticorrosive coating film and high-solids rapid-cured anticorrosive coating film, and the painted ship and the painted underwater structure coated with these coating films are described in detail hereinafter.

The high-solids anticorrosive coating composition of the invention is applied mainly onto the exterior of a ship or the like, as described in detail hereinafter.
As a matter of course, the high-solids rapid-curing anticorrosive coating composition (second paint) of the invention can be used for the same purpose as that of the first paint, but it is preferably used as an anticorrosive paint particularly for a cargo tank, a ballast tank, etc. inside a ship. Conventional tar epoxy paints enable painting (coating) operation of about once a day, but this second paint has a proper pot life and enables painting operations (e.g., airless coating) of many times for a short period of time by devising a painting method, and for example, painting (coating) operations of as many as twice a day (1 day 2 coatings, 2 coat/day) are possible. Moreover, the second paint is excellent in the high-solids property, moderate rapid curability for the working and curability at low temperatures, and enables rationalization and shortening of a term and a process to increase production efficiency.

Particularly, the high-solids rapid-curing anticorrosive coating composition can be used by forcedly feeding components for constituting the high-solids rapid-curing anticorrosive coating composition (main agent component (A) and curing agent component (B)) to a static mixer through different feed pipes, mixing them, then guiding the resulting high-solids rapid-curing anticorrosive coating composition to a spray gun (2-cylinder airless spray coater) and coating a base surface with the composition. Instead of using the static mixer, the components may be stirred and mixed during the line transportation.

As preferred conditions of coating (painting) with the high-solids rapid-curing anticorrosive coating composition, for example, a primary (air) pressure of 1 to 5 kgf/cm² and a secondary (paint) pressure of 100 to 300 kgf/cm² are adoptable, and more specifically, there can be mentioned a primary (air) pressure of 3 kgf/cm², a secondary (paint) pressure of 240 kgf/cm², a spray gun traveling rate of 50 to 120 cm/sec, and a distance, between an object to be painted and a spray gun, of 15 to 100 cm.

In the present invention, by adopting this painting method as a painting method with the high-solids rapid-curing anticorrosive coating composition, proper control of a pot life of the paint can be favorably carried out according to the drying/curing time of the paint and the building process or term of a ship or the like, and for example, proper control can be carried out so that the pot life of the paint should become 10 minutes or more and the time required for drying/curing the resulting coating film should become not more than 8 hours. By applying the high-solids rapid-curing anticorrosive coating composition, which should be called "VOC-free", using a two-liquid mixing airless coater as a coating apparatus, shortening of the painting term and drastic rationalization can be carried out, and 1 day 2 coatings are possible.

Further, this second paint is **characterized in that** it does not substantially contain a low-boiling point organic solvent having a boiling point of not higher than 150°C at atmospheric pressure as a volatile organic compound (particularly a solvent) and substantially contains (only) a high-boiling point organic solvent having a boiling point of higher than 150°C at atmospheric pressure, e.g., preferably benzyl alcohol (boiling point: 205.45°C), and is advantageous also from the viewpoints of improvement of the painting environment for workers and countermeasure to the VOC (volatile organic compound) regulation because a volatile organic solvent is not used (VOC-free). Although the upper limit of the boiling point of the high-boiling point organic solvent is not specifically restricted, it is usually 350°C or below it.

In the second paint (high-solids rapid-curing anticorrosive coating composition), the high-boiling point organic solvent is desirably contained in an amount of 0.01 to 20% by weight, preferably about 1 to 7% by weight, in other words, in an amount of 0.01 to 20 parts by weight, preferably 1 to 7 parts by weight, based on 100 parts by weight of the solids (film-forming component) in the paint, from the viewpoint of security of painting workability and anticorrosion property of the coated surface of an object.

Paints heretofore called "rapid-curing paints" are not used in such a manner that their components are forcedly fed to a static mixer, mixed, then guided to a spray gun and sprayed, as in the present invention, but a "tip mixing method" wherein the components (e.g., main agent and curing agent) are directly mixed at the tip of a spray gun and sprayed has been adopted. This tip mixing method is adopted in the painting with urethane resin coatings using reaction of polyol or thiol with isocyanate or urea resin coatings using reaction of isocyanate with amine.

For painting with these coatings, heating of the coatings to about 60°C, use of plural hoses for the coatings and heat retention of the horses become necessary, so that the above painting method has not been used for painting ships so far. The reason is that in case of painting using the tip mixing method wherein the components are mixed at the tip of a spray gun, plural lines, e.g., three lines of a main agent of a paint, a curing agent of a paint and a cleaning thinner, come up to the hand of a painting worker, so that the tip mixing method cannot be applied to the block painting system of a ship from the viewpoint of workability.

Amine-curing solvent-free coatings (paints) using conventional low-molecular epoxy resins (liquid epoxy resins) have a drawback in a balance between a pot life and a drying/curing time of the resulting coating film.
In general, coatings (paints), which are solvent-free coatings and use low-molecular epoxy resins and amine-based resins, present exothermic reaction, and after mixing, the viscosity of the coatings is rapidly increased with temperature rise, and they have a short pot life, resulting in disadvantages in the painting workability.

That is to say, if the pot life (period of time in which the viscosity does not hinder the painting work) of the coatings is lengthened considering painting workability important, the time required for drying and curing the coating film becomes long, and this is unsuitable from the viewpoint of performance of rapid shipbuilding. On the other hand, if the drying/curing time of the above coatings is shortened considering performance of rapid shipbuilding important, the pot life becomes too short, and this hinders the painting workability. Particularly at low temperatures, the drying/curing time of the coating film tends to become long, and this is disadvantageous from the viewpoint of performance of rapid shipbuilding.

### High-solids anticorrosive coating composition (high-solids rapid-curing anticorrosive coating composition)

The high-solids anticorrosive coating compositions are classified into a high-solids anticorrosive coating composition of all-season type and a (low-temperature curing type) high-solids anticorrosive coating composition having particularly excellent low-temperature curability.
Of the high-solids anticorrosive compositions, the high-solids rapid-curing anticorrosive coating composition is **characterized in that** it does not substantially contain a low-boiling point organic solvent having a boiling point of not higher than 150°C as a solvent and contains only a high-boiling point organic solvent having a boiling point of higher than 150°C, and is characterized also by its preferred painting method and preferred painting parts (e.g., cargo tank).

The below-described descriptions of the high-solids anticorrosive coating composition are common to the high-solids rapid-curing anticorrosive coating composition unless otherwise noted. Therefore, items common to both of them are described hereinafter, and if necessary, items preferably applied to only the high-solids rapid-curing anticorrosive coating composition are additionally described.
The items are described below in order.

### High-solids anticorrosive coating composition of all-season type

The all-season type or low-temperature curing type high-solids anticorrosive coating composition comprises a main agent component (A) and a curing agent component (B). In the main agent component (A), an epoxy resin (a1) is contained, and in the curing agent component (B), an alicyclic amine-based curing agent (b1) and/or a Mannich type curing agent (b2) is contained.

In these high-solids anticorrosive coating compositions, further, the main agent component (A) and/or the curing agent component (B) comprises at least one of the following additive (a2) and the following coating film modifier (ab):

(a2) at least one additive selected from the group consisting of (a2-1) a reactive diluent having an epoxy group and (a2-2) a modified epoxy resin, and
(ab) at least one coating film modifier selected from the group consisting of a petroleum resin, a xylene resin, a coumarone resin, a terpene phenol resin and a vinyl chloride-based copolymer, preferably at least one coating film modifier selected from the group consisting of a petroleum resin, a xylene resin and a vinyl chloride-based copolymer, more preferably a petroleum resin.

That is to say, it is possible in the invention that:
(i) only the main agent component (A) contains at least one of the additive (a2) and the coating film modifier (ab), and the curing agent component (B) does not contain them; or
(ii) only the curing agent (B) contains at least one of the additive (a2) and the coating film modifier (ab), and the main agent component (A) does not contain them; or
(iii) both of the main agent component (A) and the curing agent component (B) contain both of the additive (a2) and the coating film modifier (ab).

Taking into account use in all seasons and convenient mixing in petroleum cans heretofore used,
it is preferable that, in the high-solids anticorrosive coating composition of the invention, the main agent component (A) contains, in addition to the epoxy resin (a1) that is an essential ingredient, any one of "the additive (a2) such as an epoxy group-containing reactive diluent (a2-1) or a modified epoxy resin (a2-2)" and "the coating film modifier (ab) such as a petroleum resin", and the curing agent component (B) contains the alicyclic polyamine (b1) as shown in the later-described Examples 1 to 15 of Tables 1 and 2, or
taking into account high-solids low-temperature rapid curing and convenient mixing by a static mixer,
it is preferable that, in the high-solids anticorrosive coating composition of the invention, the main agent component (A) contains, in addition to the epoxy resin (a1) that is an essential ingredient, "the additive (a2) such as an epoxy group-containing reactive diluent (a2-1) or a modified epoxy resin (a2-2)", and the curing agent component (B) contains "the coating film modifier (ab) such as a petroleum resin" together with the alicyclic polyamine (b1), as shown in the later-described Examples 16 to 18 of Table 7.

In the present invention, a polymerizable (meth)acrylate monomer (a3) may be contained in the main agent component (A), taking control of paint viscosity, etc. into account, but the monomer (a3) is not added to the curing agent component (B).

### Epoxy resin (a1)

As the epoxy resin (a1) for use in the invention, a polymer or an oligomer containing two or more epoxy groups in a molecule or a polymer or an oligomer formed by ring-opening reaction of the epoxy groups can be mentioned.

Examples of such epoxy resins (a1) include:
a bisphenol A type epoxy resin, such as an epichlorohydrin-bisphenol A epoxy resin,
a bisphenol AD type epoxy resin, such as an epichlorohydrin-bisphenol AD epoxy resin,
a bisphenol F type epoxy resin, such as an epoxy novolak resin having a structure formed by the reaction of epichlorohydrin with bisphenol F (4',4'-methylenebisphenol),
an alicyclic epoxy resin, such as 3,4-epoxyphenoxy-3',4'-epoxyphenylcarboxymethane,
a brominated epoxy resin having a structure wherein at least a part of hydrogen atoms bonded to benzene rings in the epichlorohydrin-bisphenol A epoxy resin are replaced with bromine atoms,
an aliphatic epoxy resin having a structure formed by the reaction of epichlorohydrin with an aliphatic dihydric alcohol, and
a polyfunctional epoxy resin having a structure formed by the reaction of epichlorohydrin with tri(hydroxyphenyl)methane.
Of these, preferable as the epoxy resin (a1) is at least one epoxy resin selected from the group consisting of the bisphenol A type epoxy resin, the bisphenol AD type epoxy resin and the bisphenol F type epoxy resin.

In the present invention, the above epoxy resins can be used singly or in combination of two or more kinds. In the case where two or more kinds of the epoxy resins are used in combination, a mean value of molecular weights of the epoxy resins and a mean value of epoxy equivalents thereof are shown below.
The mean molecular weight or the like of the epoxy resins depends upon the painting (coating) and curing conditions (e.g., ordinary temperature drying painting or baking painting) of the resulting paint and cannot be determined indiscriminately, but epoxy resins having a molecular weight of usually 350 to 20,000, a viscosity (at 25°C) of not less than 12,000 cPs and an epoxy equivalent of usually 150 to 1000 g/equiv are employed.

Of such epoxy resins, a bisphenol A type epoxy resin having an epoxy equivalent of 150 to 600 g/equiv is preferably employed, and from the viewpoint of control of solids content, a liquid epoxy resin (epoxy equivalent: 150 to 220) or a semi-solid epoxy resin (epoxy equivalent: 250 to 400) is desirable.
Examples of typical bisphenol A type epoxy resins which are liquid at ordinary temperature include "Epicoat 82" (available from Yuka-Shell Epoxy Co., Ltd., epoxy equivalent: 180 to 190, viscosity (25°C): 12,000 to 15,000 cPs), "Epicoat 828X-90" (available from Yuka-Shell Epoxy Co., Ltd., 828 type epoxy resin (xylene-cut product, NV: 90%), epoxy equivalent: about 210), "E-028-90X" (available from Ohtake-Meishin Chemical Co., Ltd., 828 type epoxy resin (xylene-cut product, NV: 90%), epoxy equivalent: about 210), and "AER260" (bisphenol A type epoxy resin (liquid at ordinary temperature), available from Asahi Kasei Epoxy Co., Ltd., epoxy equivalent: 190, NV: 100%).

Examples of epoxy resins which are semi-solid at ordinary temperature include "Epicoat 834-85X" (available from Yuka-Shell Epoxy Co., Ltd., epoxy equivalent: 290 to 310, xylene-cut product, NV: 85%), and "E-834-85X" (available from Ohtake-Meishin Chemical Co., Ltd., epoxy equivalent: about 290 to 310, xylene-cut product, NV: 85%). In the present invention, these epoxy resins may be used singly or in combination of two or more kinds.

### Additive (a2)

As the additive (a2) for the main agent component (A) in the invention, at least one additive selected from the group consisting of (A2-1) a reactive diluent having an epoxy group and (a2-2) a modified epoxy resin is employed.

### Reactive diluent (a2-1) having epoxy group

The reactive diluent (a2-1) having an epoxy group is a reactive diluent for epoxy resins and contributes to improvement of curing acceleration at low temperatures.

Examples of such reactive diluents (a2-1) include phenyl glycidyl ether, alkyl glycidyl ether (number of carbon atoms in alkyl group: 1 to 13), glycidyl ester of versatic acid (R¹R²R³C-COO-Gly, R¹+R²+R³ (alkyl groups) = C8 to C10 , Gly: glycidyl group), α-olefin epoxide (CH₃-(CH₂)ₙ-Gly, n=11 to 13, Gly: glycidyl group), 1,6-hexanediol diglycidyl ether (Gly-O-(CH₂)₆-O-Gly, Gly: the same as above), neopentyl glycol diglycidyl ether (Gly-O-CH₂-C(CH₃)₂-CH₂-O-Gly, Gly: the same as above), trimethylolpropane triglycidyl ether (CH₃-CH₂-C(CH₂-O-Gly)₃, Gly: the same as above), and alkylphenyl glycidyl ether (number of carbon atoms in alkyl group: 1 to 20, preferably 1 to 5, e.g., methylphenyl glycidyl ether, ethylphenyl glycideyl ether, propylphenyl glycidyl ether).

Of the above reactive diluents (a2-1), preferable are alkyl glycidyl ether and alkylphenyl glycidyl ether because they have low viscosity, can exhibit dilution effect (decrease of paint viscosity), can provide a high-solids paint (that is, a high solids content and a low solvent content in the paint are obtained, and a coating film of large thickness can be obtained with a small number of coating times), and can improve painting workability, control of a pot life and reduction of environmental pollution.

The above reactive diluents (a2-1) can be used singly or in combination of two or more kinds. Examples of the reactive diluents (a2-1) include "Epodil 759" (alkyl(C12 - C13) glycidyl ether, available from Air Products and Chemicals, Inc., epoxy equivalent: 285) and "Cardolite NX 4764" (alkylphenol glycidyl ether, available from Cardolite Corporation, epoxy equivalent: 400).

In the main agent component (A), the reactive diluent (a2-1) is desirably contained in an amount of 0 to 40% by weight, preferably 0 to 20% by weight, based on the solids content of the epoxy resin (a1).
By adding the reactive diluent (a2-1) in the above amount, viscosity of the main agent component (A) and also viscosity of the paint composition are lowered to contribute preparation of a high-solids paint, and an anticorrosive coating composition having excellent low-temperature curability and low-solvent-content property can be obtained.

### Modified epoxy resin (a2-2)

As the modified epoxy resin (a2-2) for use in the invention, a dimer acid modified epoxy resin or an epoxy resin in which an aromatic ring is hydrogenated (also referred to as a "hydrogenated epoxy resin" hereinafter) can be mentioned.
The modified epoxy resin (a2-2) is desirably contained in an amount of 0 to 100% by weight, preferably 0 to 50% by weight, particularly preferably 0 to 30% by weight, based on the solids content of the epoxy resin (a1).

In the present invention, the additive (a2), such as the reactive diluent (a2-1), and the coating film modifier (ab), such as a petroleum resin, are desirably contained in the total amount ((a2)+(ab)) of usually 10 to 100 parts by weight, preferably 15 to 90 parts by weight, based on 100 parts by weight of the solids content of the epoxy resin (a1).
A paint composition containing the modified epoxy resin (a2-2) in the above amount has excellent adhesion to various finish coatings, and even if the interval before the finish coating operation is long, a coating film having excellent adhesion to a finish coating film can be formed from the paint composition.

### Dimer acid modified epoxy resin

The dimer acid modified epoxy resin is a resin obtained by modifying the epoxy resin (a1), usually a bisphenol type epoxy resin having an epoxy equivalent of 150 to 1,000, preferably 170 to 700, more preferably 400 to 600, with a dimer acid. If the epoxy equivalent exceeds 1,000, a crosslink density of the resulting cured coating film becomes high, and anticorrosion property inherent in the epoxy resin is deteriorated. On the other hand, it is difficult to synthesize a bifunctional epoxy group-containing bisphenol type epoxy resin having an epoxy equivalent of less than 150.

The dimer acid is a dimer of an unsaturated fatty acid, and usually contains a small amount of a monomer or a trimer.
As the unsaturated fatty acid, a carboxyl acid compound having 12 to 24 carbon atoms (including carbon atoms of carboxyl group), preferably 16 to 18, and having one or more unsaturated bonds in one molecule is employed. Examples of such unsaturated fatty acids include:
fatty acids having 1 unsaturated bond, such as oleic acid, elaidic acid and cetoleic acid;
fatty acids having 2 unsaturated bonds, such as sorbic acid, linoleic acid; and
fatty acids having 3 or more unsaturated bonds, such as linolenic acid and arachidonic acid.

Further, fatty acids obtained from animals and plants, such as soybean oil fatty acid, tall oil fatty acid and linseed oil fatty acid, are also employable.
In the modified epoxy resin (a2), the degree of modification with the dimer acid is in the range of 4 to 30% by weight, preferably 5 to 20% by weight, based on the epoxy resin (a1). If the degree of modification is less than 4% by weight, the resulting modified epoxy resin has poor compatibility in an aromatic solvent and also has insufficient flexibility. On the other hand, if the degree of modification exceeds 30% by weight, adhesion property and anticorrosion property inherent in the epoxy resin tend to be impaired.

The modified epoxy resin (a2) for use in the invention is an epoxy resin obtained by the reaction of the above epoxy resin (a1) with the dimer acid and having an epoxy equivalent of 150 to 1,000, preferably 170 to 700, more preferably 400 to 600. If the epoxy equivalent is less than 150, it tends to become difficult to synthesize a modified epoxy resin (a2) whose degree of modification with the dimer acid is not less than 4% by weight. On the other hand, if the epoxy equivalent exceeds 1,000, a crosslink density of the resulting cured coating film becomes low, and anticorrosion property inherent in the epoxy resin tends to be impaired.

A synthesis process of the modified epoxy resin (a2) for use in the invention is not specifically restricted, and a publicly known process is employable. For example, there are a process wherein an epoxy resin that is solid or semi-solid at ordinary temperature is synthesized first by the reaction of a liquid epoxy resin with bisphenol or the reaction of epichlorohydrin with bisphenol and then a dimer acid is added to perform reaction (two-stage process) and a process wherein a dimer acid, a liquid epoxy resin and bisphenol are allowed to react with one another at the same time (one-stage process).

In the two-stage process, an epoxy resin is first synthesized at a temperature of 50 to 250°C, preferably 100 to 200°C, using a catalyst that is usually used for epoxidation reaction.
Examples of the catalysts used in this synthesis include:
alkali metal hydroxides, such as sodium hydroxide, potassium hydroxide and lithium hydroxide;
alkali metal alcoholates, such as sodium methylate;
alkali metal salts, such as lithium chloride and lithium carbonate;
tertiary amines, such as dimethylbenzylamine, triethylamine and pyridine;
quaternary ammonium salts, such as tetramethylammonium chloride and benzyltrimethylammonium chlorode;
organic phosphorus compounds, such as triphenylphosphine, triethylphosphine and triphenylphosphine;
Lewis acids, such as arsenic trifluoride, aluminum chloride, tin tetrachloride and diethyl ether complex of arsenic trifluoride; and
methyl iodide adducts.

Then, to the epoxy resin obtained as above, a given amount of a dimer acid is added, and the epoxy resin and the dimer acid are allowed to react with each other at a temperature of 100 to 200°C in the presence of a catalyst, such as tertiary amine, quaternary ammonium salt or methyl iodide adduct. Also in the one-stage process wherein the dimer acid, the liquid epoxy resin and bisphenol are allowed to react with one another at the same time, to these ingredients is added a catalyst, such as tertiary amine, quaternary ammonium salt or methyl iodide adduct, and they are allowed to react with one another at a temperature of 100 to 200°C to synthesize a dimer acid modified epoxy resin (a2-2).

The catalytic amount used in the reaction is in the range of about 0.01 to 10,000 ppm, preferably about 0.1 to 1,000 ppm.
Examples of the dimer acid modified epoxy resins include "Epon Resin 874-CX-90" (available from Yuka-Shell Epoxy Co., Ltd., epoxy equivalent: 245 to 275, xylene-cut product, NV: 90%) and "DME-111" (available from Ohtake-Meishin Chemical Co., Ltd., epoxy equivalent: 245 to 275, xylene-cut product, NV: 90%),

### Hydrogenated epoxy resin

The hydrogenated epoxy resin can be readily obtained by selectively carrying out hydrogenation reaction of an epoxy resin having an aromatic ring under pressure in the presence of a catalyst.

Examples of the epoxy resins having an aromatic ring include:
bisphenol type epoxy resins, such as a bisphenol A type epoxy resin, a bisphenol F type epoxy resin and a bisphenol S type epoxy resin;
biphenol type epoxy resins, such as diglycidyl ether of biphenol and tetramethyl glycidyl ether of biphenol;
novolak type epoxy resins, such as a naphtalene type epoxy resin, a phenol novolak epoxy resin, a cresol novolak epoxy resin and a hydroxybenzaldehyde phenol novolak epoxy resin; and
polyfunctional epoxy resins, such as glycidyl ether of tetrahydroxyphenylmethane, glycidyl ether of tetrahydroxybenzophenone and epoxidized polyvinyl phenol.

Of these, preferable are liquid hydrogenated epoxy resins obtained from a bisphenol A type epoxy resin, a bisphenol F type epoxy resin and a phenol novolak type epoxy resin each of which has an epoxy equivalent of 150 to 1000.
The hydrogenated epoxy resin for use in the invention can be prepared by hitherto known hydrogenation. For example, an epoxy resin having an aromatic ring as a raw material is dissolved in an organic solvent such as tetrahydrofuran or dioxane, and the aromatic rings are selectively hydrogenated in the presence of a catalyst in which rhodium or ruthenium is supported on graphite (graphite of hexagonal crystal), whereby a hydrogenated epoxy resin can be prepared. Graphite having a surface area of not less than 10 m²/g and not more than 400 m²/g is employed as a carrier. The reaction is carried out usually at a pressure of 1 to 30 MPa and a temperature of 30 to 150°C for a reaction time of 1 to 20 hours. After the reaction is completed, the catalyst is removed by filtration, and vacuum distillation is performed until the ether-based organic solvent is substantially removed, whereby the hydrogenated epoxy resin can be obtained.

Such a hydrogenated epoxy resin is, for example, "Rikaresin HBE-100" (available from New Japan Chemical Co., Ltd., diglycidyl ether of alicyclic diol, epoxy equivalent: 220).

### Coating film modifier (ab)

The coating film modifier (ab) for use in the invention is added to both of the main agent component (A) and the curing agent component (B) or any one of them under the aforesaid conditions (i.e., conditions that at least one of the additive (a2) and the coating film modifier (ab) is contained in the main agent component (A) and/or the curing agent component (B)). As the coating film modifier (ab), at least one substance selected from the group consisting of a petroleum resin, a xylene resin, a coumarone resin, a terpene phenol.resin and a vinyl chloride-based copolymer (preferably the group consisting of a petroleum resin, a xylene resin and a vinyl chloride-based copolymer) is employed, and from the viewpoints of easy availability and convenient handling, a petroleum resin is more preferably employed.

Taking the objects and the effects of the present invention into account, the coating film modifier (ab) is frequently contained in an amount (total amount) of usually 0.1 to 30% by weight, preferably about 3 to 20% by weight, in the paint.
By the use of a petroleum resin, a xylene resin, a coumarone resin, a terpene penol resin or the like (preferably a petroleum resin or a xylene resin) as the coating film modifier (ab), flexibility can be imparted to the resulting coating film, and by the use of a vinyl chloride-based copolymer, a coating film having more excellent adhesion to a finish coating film can be obtained even if the interval before the finish coating operation is long.

### Petroleum resin

The petroleum resin is a polymer containing a hydroxyl group, which is formed using, as a main raw material, a fraction produced as a by-product in the petroleum refining. In the present invention, a hydroxyl group-containing petroleum resin having a softening point of not higher than 150°C, preferably not higher than 100°C, is desirable. If the softening point of the petroleum resin exceeds 150°C, paint viscosity is increased to thereby lower workability, and coating film properties are deteriorated, so that such a softening point is undesirable.

The content of the hydroxyl group in the petroleum resin is desirably in the range of 0.3 to 2 mol, preferably 0.5 to 0.95 mol, in 1 mol of the petroleum resin. If the hydroxyl group content is less than 0.3 mol, compatibility with the curing agent component (B) is lowered to thereby exert evil influence on the coating film properties, and if the hydroxyl group content exceeds 2 mol, water resistance and seawater resistance of the coating film are lowered, so that such contents are undesirable.
Examples of the petroleum resins employable in the invention include an aromatic petroleum resin obtained by polymerizing a C9 fraction (e.g., styrene derivative, indene or vinyltoluene) obtained from a heavy oil that is produced as a by-product by petroleum naphtha cracking, an aliphatic petroleum resin obtained by polymerizing a C5 fraction such as 1,3-pentadiene or isoprene, a copolymer-based petroleum resin obtained by copolymerizing the C9 fraction and the C5 fraction, an aliphatic petroleum resin wherein a part of a conjugated diene of the C5 fraction such as cyclopentadiene or 1,3-pentadiene is cyclic-polymerized, a resin obtained by hydrogenating the aromatic petroleum resin, and an alicyclic petroleum resin obtained by polymerizing dicyclopentadiene. Into these petroleum resins, hydroxyl groups are introduced. Of the above petroleum resins, a hydroxyl group-containing aromatic petroleum resin is particularly preferable from the viewpoints of water resistance and seawater resistance.

The above petroleum resins can be used singly or in combination of two or more kinds.
Examples of the petroleum resins include "Necires EPX-L" (indene-styrene-based petroleum resin, trade name, available from Nevcin Polymers Co.) and "HILENOL PL-1000S" (C9 fraction petroleum resin, available from KOLON CHEMICAL Co.).

### Xylene resin

The xylene resin for use in the invention is a resin synthesized from metaxylene and formaldehyde by a publicly known process. Also employable are xylene resins modified with phenols such as bifunctional phenol (e.g., phenol, para-t-butylphenol).

Examples of the xylene resins include "Nikanol Y-51" and "Nikanol Y-100" (both: xylene formaldehyde resin, available from Fudow Corporation).

### Coumarone resin

The coumarone resin is a copolymer containing a coumarone constituent unit, an indene constituent unit and a styrene constituent unit in its main chain.

The coumarone resin may be modified with phenol at the end, and at least a part of aromatic rings in the coumarone resin may be hydrogenated. Such coumarone resins include a liquid product having a number-average molecular weight Mn (measured by GPC, in terms of polystyrene, the same shall apply hereinafter) of 200 to 300 and a solid product having a number-average molecular weight Mn of 600 to 800, and any one of them may be used singly, or both of them may be used in combination.

### Terpene phenol resin

The terpene phenol resin is a copolymer of a terpene monomer and a phenol-based compound. Examples of constituent units that are derived from terpene and constitute the terpene phenol resin (referred to as "terpene-based constituent units" hereinafter) include constituent units derived from non-cyclic terpene and cyclic terpene, such as monoterpene (C₁₀H₁₆), .sesquiterpene, diterpene and triterpene, and derivatives thereof. Examples of constituent units that are derived from the phenol-based compounds and constitute the terpene phenol resin (referred to as "phenol-based constituent units" hereinafter) include constituent units derived from phenol, cresol and bisphenol A.

The terpene-based constituent units may be present in the terpene phenol resin singly or in combination of two or more kinds, and also the phenol-based constituent units may be present in the terpene phenol resin singly or in combination of two or more kinds. (In other words, the terpene monomers and the derivatives thereof can be used singly or in combination of two or more kinds, and also the phenol-based compounds can be used singly or in combination of two or more kinds.) The terpene-based constituent units and the phenol-based constituent units may be arranged alternately or bonded at random to constitute the terpene phenol resin.

The terpene phenol resin desirably has a number-average molecular weight (Mn, measured by GPC, in terms of polystyrene, the same shall apply hereinafter) of about 200 to 600, preferably about 300 to 500.

### Vinyl chloride-based copolymer

Examples of the vinyl chloride-based copolymers for use in the invention include a vinyl chloride/vinyl acetate copolymer, a vinyl chloride/vinyl propionate copolymer, a vinyl chloride/alkyl vinyl ether copolymer, a vinyl chloride/acrylonitrile copolymer, a vinyl chloride/diethyl maleate copolymer, a vinyl chloride/ethylene copolymer, a vinyl chloride/maleic anhydride copolymer, a vinyl chloride/alkyl (meth)acrylate copolymer (number of carbon atoms in alkyl group: about 1 to 5), a vinyl chloride/styrene copolymer, a vinyl chloride/vinylidene chloride copolymer, a vinyl chloride/vinyl stearate copolymer, a vinyl chloride/maleic' acid (or maleic ester) copolymer and a vinyl chloride/aliphatic vinyl copolymer.

Also employable are graft modification products of polyvinyl chloride obtained by graft modification of polyvinyl chloride with "other monomers" than vinyl chloride, and copolymers obtained by grafting a vinyl chloride monomer on "other polymers" than polyvinyl chloride.
Examples of the "other monomers" include (meth)acrylic acid alkyl esters (number of carbon atoms in alkyl group: about 1 to 5), styrene, acrylonitrile, diethyl maleate, olefins (e.g., ethylene, propylene), maleic anhydride, vinylidene chloride, stearic acid, maleic acid, maleic ester and aliphatic vinyl, which are monomers for forming the aforesaid vinyl chloride-based copolymers.

Of the above vinyl chloride-based copolymers, the vinyl chloride/alkyl vinyl ether copolymer is particularly preferable because it has excellent affinity for a bisphenol type epoxy resin and has excellent finish coating property and anticorrosion property.
As the vinyl chloride/alkyl vinyl ether copolymer, a copolymer of vinyl chloride and an alkyl vinyl ether having 1 to 10 carbon atoms, preferably 2 to 5 carbon atoms, in its alkyl group, such as a vinyl chloride/isobutyl vinyl ether copolymer, a vinyl chloride/isopropyl vinyl ether copolymer or a vinyl chloride/ethyl vinyl ether copolymer, is preferably employed.

The vinyl chloride-based copolymer desirably has a weight-average molecular weight (Mw, measured by GPC, in terms of polystyrene, the same shall apply hereinafter) of usually 10,000 to 100,000, preferably about 20,000 to 50,000, particularly preferably 22,000 to 40,000. When the weight-average molecular weight is in this range, affinity for an epoxy resin tends to be improved.

Examples of the vinyl chloride/isobutyl vinyl ether copolymers as the vinyl chloride/alkyl vinyl ether copolymers include "Laroflex LR8829", "Laroflex MP25", "Laroflex MP35" and "Laroflex MP45" (trade names, available from BASF Corporation.).
The above vinyl chloride-based copolymers can be used singly or in combination of two or more kinds.

### Other ingredients

To the main agent component (A) for use in the invention, other ingredients than the above various ingredients, such as pigment, solvent, silane coupling agent, anti-sagging/anti-setting agent, plasticizer, inorganic dehydrator (stabilizer), antifouling agent and other film-forming ingredients, can be added when needed, within limits not detrimental to the objects of the present invention.

The pigment is, for example, an extender pigment or a color pigment. Examples of the extender pigments include barium sulfate, potash feldspar, baryta powder, silica, calcium carbonate, talc, mica and glass flake. Examples of the color pigments include titanium white, red iron oxide, yellow iron oxide and carbon black.
As the mica, high-aspect ratio mica having an aspect ratio of 30 to 90 is preferable from the viewpoints of improvement of blister resistance of coating film, reduction of creep and relaxation of internal stress, and as such high-aspect ratio mica, "Suzorite Mica 200 HK" (available from Kuraray Co., Ltd., aspect ratio: 40 to 60) or the like is employed.

The high-aspect ratio mica that is one kind of a pigment ingredient is desirably used in an amount of usually 3 to 10 parts by weight in 100 parts by weight of the main agent component (A), and by using the mica in this amount, the coating film properties such as resistance to corrosion due to water and flexing resistance are improved.
The total amount of the above-mentioned various pigments including the mica varies depending upon the use purpose and cannot be determined indiscriminately, but they are frequently contained in the total amount of 10 to 75% by weight in the main agent component (A). Further, they are frequently contained in the total amount of 10 to 75 parts by weight in 100 parts by weight of the solids in the main agent component (A).

The boiling point of the solvent used in the high-solids anticorrosive coating composition is not specifically restricted, and publicly known solvents having boiling points of wide range are employable. Examples of such solvents include xylene, toluene, MIBK, methoxypropanol, MEK, butyl acetate, n-butanol, isobutanol and IPA.
The above solvents can be used singly or in combination of two or more kinds.

In the high-solids rapid-curing anticorrosive coating composition of the invention, however, a solvent having a boiling point of not higher than 150°C at atmospheric pressure is not substantially contained, and a high-boiling point organic solvent having a boiling point of usually higher than 150°C, preferably higher than 200°C, at atmospheric pressure is preferably employed. Although the upper limit of the boiling point is not specifically restricted, it is usually about 350°C or below it.
As the high-boiling point organic solvent, for example, benzyl alcohol (boiling point: 205.45°C), octyl phenol, resorcinol and the like are preferably used because they lower paint viscosity and improve workability. These high-boiling point solvents are used singly or in combination of two or more kinds.

The amount of the solvent added is not specifically restricted, but when the solvent is added to the main agent component (A), it is desirably contained in an amount usually 2 to 15% by weight, preferably 5 to 10% by weight, taking coating properties, etc. into account.
Especially when the high-boiling point solvent is added to the main agent component (A) of the high-solids rapid-curing anticorrosive coating composition, the solvent is desirably contained in an amount of usually 0.1 to 20% by weight, preferably 0.1 to 15% by weight, particularly preferably 0.1 to 10% by weight.

The silane coupling agent, which is used as a constituent of the main agent component (A) when needed, usually has two kinds of functional groups in the same molecule, contributes to increase of adhesive force to an inorganic base and to lowering of paint viscosity, and is represented by, for example, the formula: X-Si-(OR)₃ (wherein X is a functional group capable of undergoing reaction with an organic substance (examples of such groups: amino group, vinyl group, epoxy group, mercapto group, halogen group, or hydrocarbon group containing these groups, in this hydrocarbon group an ether bond or the like may be present) or an alkyl group, and OR is a hydrocarbon group (e.g., methoxy group, ethoxy group)).

Examples of the silane coupling agents include "KBM403" (γ-glycidoxypropyltrimethoxysilane, available from Shin-Etsu Chemical Co., Ltd.) and "Silane S-510" (available from Chisso Corporation).
When the silane coupling agent is used, the silane coupling agent is desirably contained in an amount of 0.1 to 10 parts by weight, preferably 0.5 to 5 parts by weight, in 100 parts by weight of the paint composition. If the paint composition containing the silane coupling agent in this amount in the main agent component (A) is used, film coating properties such as adhesion are improved, and especially in case of the high-solids anticorrosive coating composition, paint viscosity is lowered to thereby improve workability.

As the anti-sagging/anti-setting agent (thixotropic agent), a thixotropic agent, such as polyamide wax, polyethylene wax or a bentonite-based thixotropic agent, is employed.
Examples of such anti-sagging/anti-setting agents include "Disperon 4200-20" and "Disperon A630-20X" (available from Kusumoto Chemicals, Ltd.) and "ASAT-250F" (available from Ito Seiyu K.K.).

The main agent component (A) for use in the invention can be prepared by mixing and stirring the above ingredients in accordance with a usual method.

### Curing agent component (B)

The curing agent component (B) for use in the anticorrosive coating composition of the invention comprises an alicyclic amine-based curing agent (b1), and if necessary, further comprises the aforesaid coating film modifier (ab).

The alicyclic amine-based curing agent (b1) is contained as a solid in an amount of 20 to 100 parts by weight, preferably 30 to 90 parts by weight, particularly preferably 50 to 80 parts by weight, in 100 parts by weight of the curing agent component (B).
Especially when the high-solids rapid-curing anticorrosive coating composition contains the alicyclic amine-based curing agent (b1), this curing agent (b1) is contained as a solid in an amount of 5 to 100 parts by weight, preferably 8 to 90 parts by weight, particularly preferably 10 to 50 parts by weight, in 100 parts by weight of the curing agent component (B).

Especially in the high-solids rapid-curing anticorrosive coating composition, the coating film modifier (ab) that is used when needed is desirably contained in an amount of 0.1 to 50 parts by weight, preferably 5 to 40 parts by weight, particularly preferably 15 to 35 parts by weight, in 100 parts by weight of the curing agent component (B), from the viewpoints of lowering of viscosity, impartation of flexibility and control of a pot life.
The all-season type anticorrosive coating composition comprising the curing agent component (B) and the aforesaid main agent component (A) secures a pot life and can be used irrespective of seasons and temperatures. A coating film formed from this anticorrosive coating composition is excellent in anticorrosion property, weathering resistance and adhesion to various finish coating films and is not deteriorated in the adhesion to the finish coating films even if the interval before the finish coating operation is long.

### Alicyclic amine-based.curing agent (b1)

Examples of the alicyclic amine-based curing agents (b1) include 1,4-cyclohexanediamine, 4,4'-methylenebiscyclohexylamine, 4,4'-isopropylidenebiscyclohexylamine, norbornanediamine (NBDA), bis(aminomethyl)cyclohexane, diaminodicyclohexylmethane, isophoronediamine (IPDA), menthenediamine (MDA), adduct of norbornanediamine with epoxy resin (NBDA adduct) and adduct of isophorone with epoxy resin (IPD adduct). Mixtures of these curing agents are also employable. Norbornanediamine (NBDA) is 2,5- or 2,6-bis(aminomethyl)-bicyclo[2,2,1]heptane, and isophoronediamine (IPDA) is 3-aminomethyl-3,5,5-trimethylcyclohexylamine.

In the present invention, the NBDA adduct is employed. Such an adduct is obtained by allowing norbornanediamine or isophoronediamine to react with an epoxy resin, and can be prepared by, for example, a process described in Japanese Patent Laid-Open Publication 253556/1996, corresponding to US 5,631,332.

As the epoxy resin, a resin obtained by allowing bisphenol such as bisphenol A or bisphenol F to react with epichlorohydrin, a resin obtained by allowing a novolak resin that is an addition condensate of phenol or cresol and formaldehyde to react with epichlorohydrin, etc. are used singly or as a mixture. In particular, an epoxy resin having an epoxy equivalent of 150 to 600 g/eq and having two or more epoxy groups in one molecule is preferable. This epoxy resin is generally liquid or semi-solid. Of such epoxy resins, most preferable is bisphenol A diglycidyl ether or bisphenol F diglycidyl ether, which is a liquid resin obtained by allowing bisphenol A or bisphenol F to react with epichlorohydrin and has an epoxy equivalent of 150 to 300 g/eq.

Of the above resins, the NBDA adduct is employed because the resulting coating film is rapidly dried.
Examples of the NBDA adducts include "Ancamine 2597" (available from Air Products and Chemicals, Inc., active hydrogen equivalent: 90), "NAD-1" (available from Ohtake-Meishin Chemical Co., Ltd., active hydrogen equivalent: 96) and "PT-815" (available from PTI Japan, active hydrogen equivalent: 90).
Examples of the IPDA adducts include "Ancamine 2489" (available from Air Products and Chemicals, Inc., active hydrogen equivalent: 83) and "AD-101" (available from Ohtake-Meishin Chemical Co., Ltd., active hydrogen equivalent: 96).

As the alicyclic amine-based curing agent (b1), a blend of the NBDA adduct and/or the IPDA adduct with polyamidoamine or its adduct may be employed taking the cost into account.
The polyamidoamine is mainly formed by condensation of a dimer acid and polyamine and has a first and a second reactive amino groups in a molecule. Examples of such polyamidoamines include "Ancamide 2050" (available from Air Products and Chemicals, Inc., active hydrogen equivalent: 150) and "PA-290(A)" (available from Ohtake-Meishin Chemical Co., Ltd., active hydrogen equivalent: 277).

### Other ingredients

In the curing agent component (B), a solvent, a pigment, etc., which may be used in the main agent component (A), may be contained as other ingredients. Moreover, a curing accelerator may be also contained.
The amount of the solvent added is not specifically restricted, but in order to control paint viscosity, the solvent is desirably contained in an amount of usually 0 to 80 parts by weight, preferably 0 to 50 parts by weight, particularly preferably 5 to 30 parts by weight, in 100 parts by weight of the curing agent component (B).

In case of the high-solids rapid-curing anticorrosive coating composition, the type of the solvent is restricted to the aforesaid high-boiling point solvent.
The high-boiling point solvent is desirably contained in an amount of 0.1 to 80 parts by weight, preferably 1 to 50 parts by weight, particularly preferably 2 to 30 parts by weight, in 100 parts by weight of the curing agent component (B).

The curing agent accelerator is, for example, tertiary amine, and examples thereof include triethanolamine (N(C₂H₅OH)₃), dialkylaminoethanol ([CH₃(CH₂)ₙ]₂NCH₂OH, n: repetition number), triethylenediamine (1,4-diazacyclo(2,2,2)octane), and 2,4,6-tri(dimethylaminomethyl)phenol (C₆H₅-CH₂N(CH₃)₂, trade name: Versamine EH 30 (available from Henkel Hakusui Corp.), trade name: Ancamine K-54 (available from Air Products and Chemicals, Inc.)).

By adding the curing accelerator in an amount of 0.1 to 2.0 parts by weight based on 100 parts by weight of the anticorrosive coating composition, curing rate can be increased. However, if the amount added is large, there are fears of lowering of adhesion to a finish coating film and lowering of flexibility of the resulting coating film, so that the amount of the curing accelerator is as small as possible.
The curing agent component (B) for use in the invention can be prepared by mixing and stirring the above ingredients in accordance with a usual method.

### Low-temperature curing type high-solids anticorrosive coating composition

The low-temperature curing type high-solids anticorrosive coating composition of the invention comprises a main agent component (A) and a curing agent component (B). In the main agent component (A), an epoxy resin (a1) is contained, and in the curing agent component (B), an alicyclic amine-based curing agent (b1) is contained.

In the low-temperature curing type high-solids anticorrosive coating composition, further, the main agent component (A) and/or the curing agent component (B) contains at least one of the aforesaid additive (a2) and the aforesaid coating film modifier (ab).
A more specific embodiment of the low-temperature curing type high-solids anticorrosive coating composition is a high-solids anticorrosive coating composition **characterized in that**:
the main agent component (A) comprises an epoxy resin (a1) and any one of "at least one additive (a2) selected from the group consisting of (a2-1) a reactive diluent having an epoxy group and (a2-2) a modified epoxy resin" and "at least one coating film modifier (ab) selected from the group consisting of a petroleum resin, a xylene resin, a coumarone resin, a terpene phenol resin and a vinyl chloride-based copolymer" (that is, (a2) or (ab)) or both of them (i.e., (a2)+(ab)), and if further comprises a polymerizable (meth)acarylate monomer (a3), and
the curing agent component (B) comprises an alicyclic amine-based curing agent (b1).

### Main agent component (A)

The main agent component (A) for use in the low-temperature curing type high-solids anticorrosive coating composition comprises an epoxy resin (a1), at least one additive (a2) selected from the group consisting of (a2-1) a reactive diluent having an epoxy group and (a2-2) a modified epoxy resin, and a polymerizable (meth)acrylate monomer (a3), and occasionally further comprises at least one coating film modifier (ab) selected from the group consisting of a petroleum resin, a xylene resin, a coumarone resin, a terpene phenol resin and a vinyl chloride-based copolymer, preferably at least one coating film modifier (ab) selected from the group consisting of a petroleum resin, a xylene resin and a vinyl chloride-based copolymer.

In 100 parts by weight of the main agent component (A) in the low-temperature curing type high-solids anticorrosive coating composition of the invention:
the epoxy resin (a1) is contained as a solid in an amount of 5 to 50 parts by weight, preferably 10 to 40 parts by weight, particularly preferably 15 to 30 parts by weight,
the reactive diluent (a2-1) having an epoxy group is contained in an amount of 0 to 20 parts by weight, preferably 0 to 10 parts by weight,
the modified epoxy resin (a2-2) is contained as a solid in an amount of 0 to 50 parts by weight, preferably 0 to 30 parts by weight, particularly preferably 0 to 15 parts by weight,
the coating film modifier (ab) is contained in an amount of 0 to 10 parts by weight, preferably 0 to 5 parts by weight, and
the polymerizable (meth)acrylate monomer (a3) is contained in an amount of 0.2 to 5 parts by weight, preferably 0.5 to 3 parts by weight.

In the low-temperature curing type high-solids anticorrosive coating composition of the invention, further, it is desirable that the additive (a2), such as the reactive diluent (a2-1), and the coating film modifier (ab), such as a petroleum resin, are contained in the total amount ((a2)+(ab)) of usually 1 to 20 parts by weight, preferably 3 to 15 parts by weight, particularly preferably 5 to 15 parts by weight, in 100 parts by weight of the main agent component (A) in the paint composition. In the present invention, any one of the additive (a2) and the coating film modifier (ab) is used in the above amount in many cases from the viewpoints of working efficiency and preparation cost of a paint, as shown in, for example, the later-described Tables 1, 2 and 7.

The low-temperature curing type high-solids anticorrosive coating composition using the main agent component (A) containing the (meth)acrylate monomer (a3) in combination with the curing agent component (B) exerts effects as a universal primer and can be used even in the winter season and in the cold district because it has particularly excellent low-temperature curability (0°C).

### Polymerizable (meth)acrylate monomer (a3)

As the polymerizable (meth)acrylate monomer (a3), a monofunctional or polyfunctional aliphatic (meth)acrylate monomer and/or a monofunctinal or polyfunctional aromatic (meth)acrylate monomer is employable.
Examples of the monofunctional aliphatic (meth)acrylate monomers include methyl (meth)acrylate, ethyl (meth)acrylate, n-butyl (meth)acrylate, i-butyl (meth)acrylate, t-butyl (meth)acrylate, 2-ethylhexyl (meth)acrylate, lauryl (meth)acrylate, stearyl (meth)acrylate, 2-hydroxyethyl (meth)acrylate, 2-hydroxypropyl (meth)acrylate, 2-hydroxybutyl (meth)acrylate, 4-hydroxybutyl (meth)acrylate, methoxyethyl (meth)acrylate and ethoxyethyl (meth)acrylate.

The polyfunctional aliphatic (meth)acrylate monomer is, for example, a bifunctional, a trifunctional or a tetrafunctional aliphatic (meth)acrylate monomer.
Examples of the bifunctional aliphatic (meth)acrylate monomers include ethylene glycol di(meth)acrylate, diethylene glycol di(meth)acrylate, triethylene glycol di(meth)acrylate, butylene glycol di(meth)acrylate, neopentyl glycol di(meth)acrylate, propylene glycol di(meth)acrylate, 1,3-butanediol di(meth)acrylate, 1,4-butanediol di(meth)acrylate and 1,6-hexanediol di(meth)acrylate.

Examples of the trifunctional aliphatic (meth)acrylate monomers include trimethylolpropane tri(meth)acrylate, trimethylolethane tri(meth)acrylate, trimethylolethanol tri(meth)acrylate and trimethylolmethane tri(meth)acrylate.
Examples of the tetrafunctional aliphatic (meth)acrylate monomers include pentaerythritol tetra(meth)acrylate.

On the other hand, examples of the monofunctional aromatic (meth)acrylate monomers include phenyl (meth) acrylate, benzyl (meth)acrylate, phenoxyethyl (meth)acrylate, phenoxypropyl (meth)acrylate, phenoxydiethylene glycol (meth)acrylate and phenoxyhydroxypropyl (meth)acrylate.

The polyfunctional aromatic (meth)acrylate monomer is, for example, a bifunctional aromatic (meth)acrylate monomer, and examples thereof include 2,2-bis((meth)acryloxyphenyl)propane, 2,2-bis[4-(3-(meth)acryloxy)-2-hydroxypropoxyphenyl]propane, 2,2-bis(4-(meth)acryloxyethoxyphenyl)propane, 2,2-bis(4-(meth)acryloxydiethoxyphenyl)propane, 2,2-bis(4-(meth)acryloxytriethoxyphenyl)propane, 2,2-bis(4-(meth)acryloxytetraethoxyphenyl)propane, 2,2-bis(4-(meth)acryloxypentaethoxyphenyl)propane, 2,2-bis(4-(meth)acryloxypropoxyphenyl)propane, 2(4-(meth)acryloxydiethoxyphenyl)-2(4-(meth)acryloxydiethoxyphenyl)propane, 2(4-(meth)acryloxydiethoxyphenyl)-2(4-(meth)acryloxytriethoxyphenyl)propane, 2,2-bis(4-(meth)acryloxypropoxyphenyl)propane, 2,2-bis(4-(meth)acryloxyisopropoxyphenyl)propane and 2(4-(meth)acryloxydipropoxyphenyl)-2(4-acryloxytriethoxyphenyl)propane.

In the present invention, the above polymerizable (meth)acrylate monomers can be used singly or in combination of two or more kinds.
The (meth)acrylate monomer (a3) has excellent reactivity to the alicylic amine-based curing agent (b1), so that a high-solids anticorrosive coating composition having excellent low-temperature curability can be obtained.
Specific examples of the polymerizable (meth)acrylate monomers (a3) employable in the invention include "M-CURE 100" (monofunctional aromatic acrylate, viscosity (25°C): 140 cPs, equivalent: 257 to 267), "M-CURE 200" (bifunctional aromatic acrylate, viscosity (25°C): 331 cPs, equivalent: 130 to 140), "M-CURE 201" (bifunctional aliphatic acrylate, viscosity (25°C): 11 cPs, equivalent: 95 to 105), "M-CURE 300" (trifunctional aliphatic acrylate, viscosity (25°C): 100 cPs, equivalent: 112 to 122) and "M-CURE 400" (tetrafunctional aliphatic acrylate, viscosity (25°C): 180 cPs, equivalent: 80 to 90) (all manufactured and sold by SARTOMER COMPANY, INC.)

In the low-temperature curing type high-solids anticorrosive coating composition of the invention, it is desirable that the polymerizable (meth)acrylate monomer (a3) is contained in an amount of 0.3 to 40% by weight, preferably 1 to 25% by weight, particularly preferably 2 to 10% by weight, based on the solids content of the epoxy resin (a1), and is used in an amount of 1 to 60% by weight, preferably 10 to 50% by weight, particularly preferably 20 to 40% by weight, based on the solids content of the alicyclic amine-based curing agent (b1). By the use of the (meth)acrylate monomer in the above amount in combination with the alicyclic amine-based monomer (b1), the resulting anticorrosive coating composition has excellent low-temperature curability.

That is to say, the polymerizable (meth)acrylate monomer functions as a curing accelerator, and its acrylate group and the alicyclic amine-based curing agent (b1) of the curing agent component (B) undergo Michael addition reaction in the anticorrosive coating composition, as shown in the following formula 1. The Michael reaction product is not particularly excellent in reactivity and has reactivity nearly equal to that of the ingredient (b1). The addition reaction itself is a curing reaction: Because the heat value of this Michael addition reaction is small, thermal modification of the anticorrosive coating composition does not take place, and the reaction proceeds even at low temperatures (not higher than 0°C). Therefore, the anticorrosive coating composition of the invention is improved in the low-temperature curability. Such an effect is exerted more efficiently by incorporating the acrylate monomer (a3) under the above conditions and by using it in combination with the alicyclic amine-based curing agent (b1).

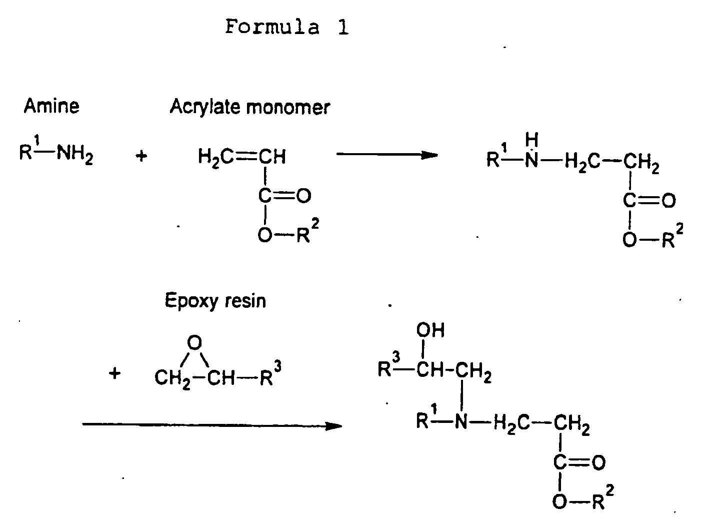

In the above formula, R¹, R² and R³ are not particularly restricted, and they represent main chains and the like in the above compounds.
The low-temperature curing type anticorrosive coating composition of the invention comprises the main agent component (A) and the curing agent component (B), and can be prepared by mixing and stirring them in accordance with a usual method.

The low-temperature curing type anticorrosive coating composition of the invention is desirably prepared by properly adding, to the main agent component (A), the curing agent component (B) in an amount of 2 to 200 parts by weight, preferably 5 to 50 parts by weight, particularly preferably 10 to 40 parts by weight, based on 100 parts by weight of the main agent component (A) so that the volume solid (nonvolatile content, % by volume) should become 72 to 100% by volume, preferably 75 to 85% by volume, the PVC (pigment volume concentration) should become 20 to 50% by volume, preferably 30 to 40% by volume, and the reaction equivalent ratio (amine active hydrogen equivalent/epoxy equivalent) should become 0.2 to 2, preferably 0.5 to 0.9, particularly preferably 0.6 to 0.8.

Particularly, the high-solids rapid-curing anticorrosive coating composition is desirably prepared by properly adding, to the main agent component (A), the curing agent component (B) in an amount of 2 to 200 parts by weight, preferably 5 to 150 parts by weight, particularly preferably 10 to 120 parts by weight, based on 100 parts by weight of the main agent component (A) so that the volume solid (nonvolatile content, % by volume) should become 72 to 100% by volume, preferably 75 to 100% by volume, the PVC (pigment volume concentration) should become 20 to 50% by volume, preferably 20 to 40% by volume, and the reaction equivalent ratio (amine active hydrogen equivalent/epoxy equivalent) should become 0.2 to 2, preferably 0.5 to 0.9, particularly preferably 0.7 to 0.9.

Such a low-temperature curing type high-solids anticorrosive coating composition of the invention has excellent adhesion to an inorganic or organic zinc shop primer, can be sufficiently cured even at a temperature of not higher than 0°C, has a long pot life and is preferable as an epoxy resin-based low-temperature curing type high-solids anticorrosive paint.

The low-temperature curing type high-solids anticorrosive coating composition of the invention described hereinbefore exhibits excellent anticorrosion performance and resistance to temperature difference (definition: resistance to phenomenon of lowering of adhesion caused by thermal osmotic pressure due to temperature difference), can be used for finish coating of inner and outer surfaces of land metal tanks, concrete underground drainage tanks, and land, underground or submarine pipelines, and can be more preferably used for coating surfaces of various bases of ships, fishing materials (e.g., rope, fishing net, float, buoy), underwater structures (e.g., water feed or drainage opening of steam power or atomic power plant) and polluted sludge diffusion preventive films in various marine engineering of bay coast roads, submarine tunnels, port facilities, canals and channels.

The low-temperature curing type high-solids anticorrosive coating composition of the invention is preferable as a heavy anticorrosive paint of low-temperature curing type employable in the low-temperature environment and in the cold district, and is particularly preferably used for ship's tanks (e.g., ballast tank, cargo oil tank), ship's outside plating, decks, cargo holds, underwater structures, etc.
The above anticorrosive coating compositions of the invention can be used as anticorrosive various molded articles, such as ship's fitting and fishing tackles (e.g., float), by casting the composition itself into a mold and curing it through reaction.

It is presumed that when the anticorrosive coating composition of the invention is applied, dried and cured, an epoxy group of the epoxy resin contained in the main agent component (A) undergoes ring opening, whereby epoxy oxygen (O) becomes a hydroxyl group (-OH), and carbon that forms the epoxy group and is present at the molecular end reacts with an amino group (-NH₂) in the curing agent such as an amine curing agent and is bonded to the amine curing agent by a "-NH-" bond.

### First method for painting exterior of ship

In the first method for painting the exterior of a ship according to the invention, the high-solids anticorrosive coating composition of the invention is applied as a primer onto (i) a bottom of a ship or (i) a bottom and (ii) a boot topping of a ship, and then the composition is preferably dried. Subsequently, onto the primer treated parts, such an organotin-free hydrolyzable antifouling paint as described below is applied.

In the present invention, it is also possible that the same anticorrosive coating composition of the invention is applied as a primer onto the whole of an outside plating of a ship including (i) a bottom, (ii) a boot topping and (iii) an outside board, then the composition is preferably dried, and subsequently, the below-described organotin-free hydrolyzable antifouling paint is applied onto the primer coating film formed on the bottom (i) or the bottom (i) and the boot topping (ii) of the primer treated outside plating.

The flat bottom portion of the ship's bottom (i) is located at the underwater deepest place of a ship and is almost free from incidence of sunlight, so that the environmental conditions are relatively mild as an environment fouled by organisms, for example, the environment is unsuitable for growth of algae.
For the flat bottom portion, therefore, an organotin-free hydrolyzable antifouling paint having excellent antifouling property is not used, but a conventional antifouling paint that is inexpensive and economically advantageous (e.g., rubber chloride-based antifouling paint, vinyl-based antifouling paint, acrylic-based antifouling paint) or a hydration decomposition type antifouling paint can be used, and depending upon the ship running environment, it is also possible to apply no antifouling paint.

The outside board (iii) (outside plating above the boot topping (ii)) of a ship having been subjected to the primer treatment is exposed to intense rays of the sun or strong wind or waves and requires weathering resistance. In the present invention, therefore, it is preferable to coat the outside board (iii) with a urethane-based, epoxy-based, acrylic-based or chlorinated polyolefin-based (rubber chloride-based) coating (paint), and it is particularly preferable to coat it with a urethane-based coating (paint).
The boot topping (ii) of a ship having been subjected to the primer treatment is in the severe environment where it suffers dry and wet alternating actions of immersion in seawater and exposure to air and requires weathering resistance, water resistance and sometimes antifouling property, so that the below-described organotin-free hydrolyzable antifouling paint or finish coating for boot topping is applied.

As the finish coating for boot topping, a urethane-based, epoxy-based, acrylic-based or chlorinated polyolefin-based (rubber chloride-based) coating (paint) or an organotin-free hydrolyzable antifouling paint is preferably employed, and an epoxy-based coating (paint) or an organotin-free hydrolyzable antifouling paint is particularly preferably employed.
In the painting of the outside plating of a ship in the above manner, it is possible that:
(1) the whole of an outside plating of a ship, i.e., a bottom (i), a boot topping (ii) and an outside board (iii), is subjected to the primer coating (preferably then dried), and thereafter, the bottom (i) or both of the bottom (i) and the boot topping (ii) are coated with an organotin-free hydrolyzable antifouling paint, or
(2) each part of the outside plating, i.e., a bottom (i), a boot topping (ii) or an outside board (iii), or a portion of each part is coated with a primer and then an organotin-free hydrolyzable antifouling paint as a finish coating (bottom (i), or both of bottom (i) and boot topping (ii)), or coated with a primer and then a finish coating for outside board (outside board (iii)) or a finish coating for boot topping (boot topping (ii)). Further, the parts having been subjected to the primer coating and drying may be coated with the above-mentioned given finish coating operation in order from the dried part.

Particularly, the high-solids rapid-curing anticorrosive coating composition of the invention is desirably used by forcedly feeding the main agent component (A) and the curing agent component (B) that are components for constituting the paint composition to a static mixer through different feed pipes, mixing them, then guiding the resulting high-solids rapid-curing anticorrosive coating composition to a spray gun, preferably a 2-cylinder airless spray coater, and coating a base surface with the composition.

The organotin-free hydrolyzable antifouling paint, the finish coating for outside board and the finish coating for boot topping, which are used in the above painting method, are described below.

### Organotin-free hydrolyzable antifouling paint

The organotin-free hydrolyzable antifouling paint is, for example, a paint containing (i) a trialkylsilyl ester copolymer or (ii) a vinyl-based resin in which an organic acid is bonded to at least one side chain end through an intermolecular bond owing to a metal ion (metal salt bond). In case of, for example, a divalent metal M, the metal salt bond between the metal M and the organic acid is represented by -COO-M-OCO- (M is a divalent metal, such as Zn, Mg or Cu, and -COO- and -OCO- are each a site derived from a carboxyl group of the organic acid).

The trialkylsilyl ester copolymer (i) and the vinyl-based resin (ii), which are preferably used in the invention, are described below in more detail.

### Trialkylsilyl ester copolymer (i)

The trialkylsilyl ester copolymer (i) contains constituent units derived from a trialkylsilyl ester of a polymerizable unsaturated carboxylic acid in amounts of usually 10 to 65% by weight, preferably 20 to 65% by weight, and has a number-average molecular weight (Mn, measured by GPC, in terms of polystyrene, the same shall apply hereinafter) of 1000 to 50000.

The trialkylsilyl ester is represented by, for example, the following formula [I].

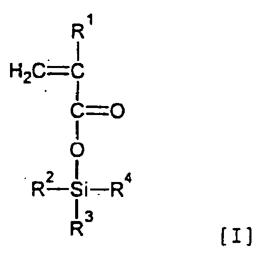

In the formula [I], R¹ is a hydrogen atom or an alkyl group such as methyl, R², R³ and R⁴ are each an alkyl group of about 1 to 18 carbon atoms, such as methyl, ethyl, propyl or butyl, and R², R³ and R⁴ may be the same as or different from one another.
Examples of the trialkylsilyl esters include:
trialkylsilyl esters wherein R², R³ and R⁴ are the same as one another, such as trimethylsilyl (meth)acrylate, triethylsilyl (meth)acrylate, triisopropylsilyl (meth)acrylate and tributylsilyl (meth)acrylate; and
trialkylsilyl esters wherein a part or all of R², R³ and R⁴ are different from one another, such as dimethylpropylsilyl (meth)acrylate, monomethyldipropylsilyl (meth)acrylate and methylethylpropylsilyl (meth)acrylate.

In the present invention, the above trialkylsilyl esters may be used singly or in combination of two or more kinds. Of the trialkylsilyl esters, preferable are those wherein at least one alkyl group of R², R³ and R⁴ has 3 or more carbon atoms, and more preferable are those wherein each of the three alkyl groups has 4 or more carbon atoms. Also preferable are those wherein the total number of carbon atoms of R², R³ and R⁴ is about 5 to 21. Of such trialkylsilyl esters, tributylsilyl (meth)acrylate is most preferably employed, taking into account ease of synthesis of trialkylsilyl ester, and film-forming property, storage stability and self-polishing property of an antifouling paint composition obtained using the trialkylsilyl ester.

As a monomer (comonomer) copolymerized with the trialkylsilyl ester, an arbitrary polymerizable unsaturated compound (ethylenically unsaturated monomer) is employable, and example of such polymerizable unsaturated compounds include (meth)acrylic acid alkyl esters, such as methyl (meth)acrylate, ethyl (meth)acrylate, 2-ethylhexyl (meth)acrylate, cyclohexyl (meth)acrylate and methoxyethyl (meth)acrylate; styrenes, such as styrene and α-methylstyrene; and vinyl esters, such as vinyl acetate and vinyl propionate. Of these, methyl (meth)acrylate (MMA) is preferably employed. The MMA is preferably contained in an amount of usually not less than 30% by weight, preferably not less than 50% by weight, in all the comonomers (ethylenically unsaturated monomers).

The constituent units derived from the polymerizable unsaturated compound such as the (meth)acrylic acid alkyl ester and the constituent units derived from the trialkylsilyl ester are bonded usually at random in the copolymer by cleavage of an ethylene linkage of each monomer used as a raw material.
In such a film-forming copolymer, constituent units (trialkylsilyl ester constituent units) derived from one or more of the above trialkylsilyl esters of polymerizable unsaturated carboxylic acids are contained as described above, and the total amount of the trialkylsilyl ester constituent units is desirably in the range of usually 10 to 65% by weight, preferably 20 to 65% by weight, more preferably 30 to 55% by weight. When the trialkylsilyl ester constituent units are contained in the above amount in the copolymer, an antifouling coating film exhibiting excellent long-term antifouling performance is obtained from the antifouling paint composition.

The copolymer desirably has a number-average molecular weight (Mn, measured by GPC, in terms of polystyrene, the same shall apply hereinafter) of 1,000 to 50,000, preferably 2,000 to 20,000, more preferably 2,500 to 15,000, particularly preferably 3,000 to 12,000, a weight-average molecular weight (Mw, measured by GPC, in terms of polystyrene, the same shall apply hereinafter) of usually 1,000 to 150,000, preferably 2,000 to 60,000, more preferably 3,000 to 30,000, a molecular weight distribution (Mw/Mn) of usually 1.0 to 4.0, preferably 1.0 to 3.0, particularly preferably 1.0 to 2.5, a glass transition temperature (Tg) of usually 15 to 80°C, preferably 25 to 80°C, more preferably 30 to 70°C, particularly preferably 35 to 60°C, and a viscosity (25°C), in for example a 50% xylene solution, of usually 30 to 1000 cPs, preferably 40 to 600 cPs.

The film-forming copolymer is prepared by, for example, allowing a trialkylsilyl ester such as tributylsilyl methacrylate to react with polymerizable unsaturated compounds (comonomers) containing not less than 50% by weight (e.g., 80% by weight) of methyl methacrylate, in an organic solvent such as xylene usually in an inert atmosphere such as a stream of nitrogen in the presence of an azo or peroxide type polymerization initiator such as 2,2'-azobisisobutyronitrile and if necessary a polymerization regulator such as n-octylmercaptan, for about 2 to 12 hours at a temperature of about 50 to 120°C, through radical polymerization or the like.

In the film-forming copolymer obtained as above, each constituent unit is contained in an amount corresponding to the amount of each monomer used.

### Vinyl-based resin (ii)

The vinyl-based resin (ii) that is preferably contained in the organotin-free hydrolyzable antifouling paint in the invention is a vinyl-based resin in which an organic acid is bonded to at least one side chain end through an intermolecular bond owing to a metal ion (metal salt bond).

Examples of the vinyl-based resins (ii) include those described in Japanese Patent Laid-Open Publication No. 73536/1996, Japanese Patent Publication No. 108927/1995, Japanese Patent Publication No. 68458/1995 and Japanese Patent Publication No. 64985/1995.
As described in, for example, Japanese Patent Laid-Open Publication No. 73536/1996, the vinyl-based resin (ii) can be prepared by copolymerizing a (meth)acrylic ester (a), in which an alcohol residue of an ester is a branched alkyl group of 4 or more carbon atoms having at least one side chain on the 2nd to the 4th carbon atom from the main chain end or a cycloalkyl group of 6 or more carbon atoms, a polymerizbale unsaturated organic acid monomer (b) and a neutral polymerizable unsaturated monomer (c) to synthesize a base resin, and then allowing an acid group (e.g., -COOH, -SO₃H) of the base resin to react with a metal compound, such as metal oxide, hydroxide, chloride or sulfide, and a monobasic organic acid (e.g., acetic acid, naphthenic acid) that is an organic acid, at the same time or allowing the base resin to react with a metal salt of a monobasic organic acid.

Examples of the (meth)acrylic esters (a) include t-butyl (meth)acrylate and cyclohexyl (meth)acrylate. Examples of the polymerizable organic acid monomers (b) include (meth)acrylic acid, maleic acid and p-styrenesulfonic acid. Examples of the neutral polymerizable unsaturated monomers (c) include ethylene, methyl (meth)acrylate and ethyl (meth)acrylate. Examples of metals to constitute the above metal compounds include divalent or higher metals, such as Cu, Zn, Mn, Ca, Fe, Al, Te and Ba.

### Finish coating for outside board

Examples of the finish coatings for outside board include oil (alkyd-based) finish coatings, phthalic acid resin-based finish coatings, chlorinated polyolefin-based (rubber chloride-based) finish coatings, vinyl-based finish coatings, acrylic-based finish coatings, epoxy-based finish coatings, urethane-based finish coatings, silicone alkyd-based finish coatings, acrylic silicone-based finish coatings and fluororesin-based finish coatings.

As the finish coating for outside board used in the invention, a urethane-based, epoxy-based, acrylic-based or chlorinated polyolefin-based (rubber chloride-based) coating is preferable, taking weathering resistance, adhesion property and economical advantage into account.
Examples of such finish coatings for outside board include "Unimarine" (trade name, available from Chugoku Marine Paints, Ltd., isocyanate crossliking two-pack urethane resin-based finish coating), "Epicon Marine Finish" and "Epicon Marine HB" (both: trade names, available from Chugoku Marine Paints, Ltd., modified polyamidoamine crossliking two-pack epoxy resin-based finish coating), "Ravax Finish" (trade name, available from Chugoku Marine Paints, Ltd., chlorinated polyolefin-based finish coating), and "Acri 700 Finish" (trade name, available from Chugoku Marine Paints, Ltd., acrylic resin-based finish coating).

### Finish coating for boot topping

As the finish coating for boot topping, various coatings mentioned above as the finish coatings for outside board can be employed, and further, the organotin-free hydrolyzable antifouling paint is also employable.
In a severe environment such that a ship's outside plating is placed and dry and wet alternating actions of immersion in seawater and exposure to air are repeated by floating and sinking of a ship, water resistance, weathering resistance, anticorrosion property and sometimes antifouling property are required. Therefore, of the aforesaid coatings, the urethane-based, epoxy-based, acrylic-based or chlorinated polyolefin-based (rubber chloride-based) coating or the organotin-free hydrolyzable antifouling paint is preferably employed.

Examples of such finish coatings for boot topping include "Unimarine" (trade name, available from Chugoku Marine Paints, Ltd., isocyanate crossliking two-pack urethane resin-based finish coating), "Epicon Marine Finish" and "Epicon Marine HB" (both: trade names, available from Chugoku Marine Paints, Ltd., modified polyamidoamine crossliking two-pack epoxy resin-based finish coating), "Ravax Finish" (trade name, available from Chugoku Marine Paints, Ltd., chlorinated polyolefin-based finish coating), and "Acri 700 Finish" (trade name, available from Chugoku Marine Paints, Ltd., acrylic resin-based finish coating).

In each of the above coatings (paints) for use in the invention, components usually added to coatings for ship's outside plating, such as antifouling agent, plasticizer, hydrolysis controlling agent, pigment, solvent, viscosity modifier and other additives, may be contained.
In the present invention, a coating film (cured film) of the above-mentioned each coating such as a primer is formed on the outside plating of a ship by a usual method, such as airless spraying, air spraying, brushing or roller coating. Prior to the primer coating, the outside plating surface may be cleaned to remove deposits thereon, such as rust, grease, moisture, dust, slime and salt, when needed. Further, the above coatings may be used after they are diluted to proper concentrations with thinner or the like.

The coating weight of each of the above coatings (paints) varies depending upon the type of a ship, the type and combination of a coating to be applied thereon, etc., and is not determined indiscriminately.
However, the anticorrosive coating composition (primer) of the invention is applied onto the whole of the outside plating of a ship in an amount of, for example, 100 to 500 g/m² and in a thickness of about 50 to 500 µm, and its dry film thickness is in the range of about 30 to 300 µm;
the organotin-free hydrolyzable antifouling paint is applied onto a coating film surface of the anticorrosive coating composition (primer) on the bottom (i) and the boot topping (ii) of the ship's outside plating in an amount of, for example, 200 to 800 g/m² and in a thickness of about 50 to 500 µm, and its dry film thickness is in the range of about 30 to 300 µm; and
the urethane coating is applied onto a coating film surface of the anticorrosive coating composition (primer) on the outside board (iii) of the ship's outside plating in an amount of, for example, 50 to 300 g/m² and in a thickness of about 40 to 300 µm, and its dry film thickness is in the range of about 30 to 150 µm.

In the airless spraying, the coating conditions are set to, for example, a primary (air) pressure of about 4 to 8 kgf/cm², a secondary (paint) pressure of about 100 to 180 kgf/cm² and a gun traveling rate of about 50 to 120 cm/sec.
These conditions are similar to those in the coating operation of a cargo tank or the like with the high-solids rapid-curing anticorrosive coating composition by airless spraying.

The number of coating times of each coating (paint) is not specifically restricted and can be properly determined according to the paint concentration, the desired thickness, etc., so that the coating may be carried out once or plural times.
Examples of ships on which the above coating (paint) is applied and cured so as to give the above thickness (painted ships) include metal ships, such as tanker; cargo boat, passenger boat, fishing boat, barge and floating dock.

In the present invention, if the anticorrosive coating composition having excellent capability of being coated with various finish coatings is used as a primer for other areas than the outside plating, such as exposed area (deck), superstructure (housing), hold and ballast tank, an effect of drastically reducing the kinds of the coatings (paints) used for the whole ship is exerted.
In the present invention, by coating, in addition to the outside plating, the exposed area (deck), the superstructure (housing), the hold and the ballast tank with the same primer for undercoating (anticorrosive coating composition of the invention) as above and then coating them with the same primer for finish coating (anticorrosive coating composition of the invention), the effect of the invention can be much more expected.

### Second method for painting exterior of ship

In the second method for painting the exterior of a ship according to the invention, the same anticorrosive coating composition is applied as a primer onto the whole of an outside plating area (A) of a ship constituted of (i) a bottom, (ii) a boot topping and (iii) an outside board and the whole of an exposed area (B) of a ship present on the upper side of a deck and constituted of (iv) a deck and (v) a superstructure, and then preferably dried.

Subsequently, the following organotin-free hydrolyzable antifouling paint is applied onto the primer coating film formed on the bottom (i) or the bottom (i) and the boot topping (ii), further a finish coating for outside board is applied onto the outside board (iii), and a finish coating for deck is applied onto the deck (iv).
Onto the primer coating film formed on the superstructure (v), a finish coating for superstructure may be applied.

In the present invention, a finish coating for boot topping can be applied onto the primer coating film formed on the boot topping (ii), when needed.
The flat bottom portion of the ship's bottom (i) is located at the underwater deepest place of a ship and is almost free from incidence of sunlight, so that the environmental conditions are relatively mild as an environment fouled by organisms, for example, the environment is unsuitable for growth of algae.

For the flat bottom portion, therefore, the organotin-free hydrolyzable antifouling paint having excellent antifouling property is not used, but a conventional antifouling paint that is inexpensive and economically advantageous (e.g., rubber chloride-based antifouling paint, vinyl-based antifouling paint, acrylic-based antifouling paint) or a hydration decomposition type antifouling paint can be used, and depending upon the ship running environment, it is also possible to apply no antifouling paint.
The outside board (outside plating above the boot topping) of a ship and the exposed area (B) that is present on the upper side of a deck and constituted of a deck (iv) and a superstructure (v), which have been subjected to the primer treatment, are exposed to intense rays of the sun or strong wind or waves and requires weathering resistance. In the present invention, therefore, it is preferable to coat them with a urethane-based, epoxy-based, acrylic-based or chlorinated polyolefin-based (rubber chloride-based) coating (paint), and it is particularly preferable to coat them with a urethane-based coating (paint).

The boot topping of a ship having been subjected to the primer treatment is in the severe environment where it suffers dry and wet alternating actions of immersion in seawater and exposure to air and requires weathering resistance, water resistance and sometimes antifouling property, so that the below-described organotin-free hydrolyzable antifouling paint or finish coating for boot topping is applied.
As the finish coating for boot topping, a urethane-based, epoxy-based, acrylic-based or chlorinated polyolefin-based (rubber chloride-based) coating (paint) or an organotin-free hydrolyzable antifouling paint is preferably employed, and an epoxy-based coating (paint) or an organotin-free hydrolyzable antifouling paint is particularly preferably employed.

In the painting of the exterior of a ship in the above manner, it is possible that:
(1) the whole of the exterior of a ship, i.e., the whole of an outside plating area (A) and an exposed area (B) on the upper side of a deck, is subjected to the primer coating (preferably then dried), and thereafter, a bottom (i) or both of a bottom (i) and a boot topping (ii) are coated with an organotin-free hydrolyzable antifouling paint, or
(2) each part of the outside plating area (A), i.e., a bottom (i), a boot topping (ii) or an outside board (iii), or a portion of each part is coated with a primer and then an organotin-free hydrolyzable antifouling paint as a finish coating (bottom (i), or both of bottom (i) and boot topping (ii)), or coated with a primer and then a finish coating for outside board (outside board (iii)) or a finish coating for boot topping (boot topping (ii)). Further, the parts having been subjected to the primer coating and drying may be subjected to the above-mentioned given finish coating operation in order from the dried part.

The organotin-free hydrolyzable antifouling paint, the finish coating for outside board and the finish coating for boot topping, which are used in the above painting method, are described below.

### Organbtin-free hydrolyzable antifouling paint

The organotin-free hydrolyzable antifouling paint is an organotin-free hydrolyzable antifouling paint containing at least one hydrolyzable resin selected from the group consisting of (i) a trialkylsilyl ester copolymer, (ii) a vinyl-resin in which an organic acid is bonded to at least one side chain end through an intermolecular bond owing to a metal ion (metal salt bond), and (iii) an unsaturated carboxylic acid metal salt-based copolymer.

Of the trialkylsilyl ester copolymer (i), the vinyl-based resin (ii) and the unsaturated carboxylic acid metal salt-based copolymer (iii), the component (i) and the component (ii) are the same as the trialkylsilyl ester copolymer (i) and the vinyl-based resin (ii) for constituting the organotin-free hydrolyzable antifouling paint described above in the first method for painting the exterior of a ship, respectively. The unsaturated carboxylic acid metal salt-based copolymer (iii) is described in detail hereinafter.

### Unsaturated carboxylic acid metal salt-based copolymer (iii)

As the unsaturated carboxylic acid metal salt-based copolymer (iii), (a) a (meth)acrylic acid hydroxy metal salt-based copolymer or (b) a (meth)acrylic acid metal salt-based copolymer containing no hydroxyl group bonded to a metal atom is preferably employed.
The (meth)acrylic acid hydroxy metal salt-based copolymer (a) has long-term slight-water-solubility as a vehicle component and has a function of imparting long-term antifouling property to a coating film. The (meth)acrylic acid hydroxy metal salt-based copolymer is preferably such a resin [II] represented by the following formula [II] and having metal carboxylate in a molecule as described in Japanese Patent Laid-Open Publication No. 209005/1996 and Japanese Patent Laid-Open Publication No. 286933/1997.

Rp-COOM-OH [II]

In the formula [II], Rp is a base resin, and M is a divalent metal atom.

The (meth)acrylic acid hydroxy metal salt-based copolymer as the resin [II] represented by the above formula [II] and having a carboxyl group in a molecule can be obtained by allowing a resin having a carboxyl group in a molecule to react with an oxide or hydroxide of a divalent metal in the presence of a small amount of water.
In this reaction, the oxide or hydroxide of a metal is used in an amount of 0.1 to 1 mol based on 1 mol of the carboxyl group in the resin, and water is used in an amount of 0.1 to 1 mol based on 1 mol of the carboxyl group.

For specifically synthesizing the resin [II], to a resin having a carboxyl group in a molecule are added water in an amount of 0.5 to 5% by weight based on the resin, an oxide or hydroxide of a divalent metal to be subjected to addition reaction, and if necessary, an extremely small amount of a polar solvent for preventing turbidity, and reaction is performed at a temperature of 50 to 200°C for 1 to 20 hours, as described in Japanese Patent Laid-Open Publication No. 286933/1997.

As the resin having a carboxyl group in a molecule, a vinyl-based polymer obtained by copolymerizing a carboxyl group-containing monomer such as (meth)acrylic acid with an acrylic acid alkyl ester (e.g., methyl methacrylate, ethyl acrylate) or another vinyl-based monomer such as styrene is preferably employed. Also employable are vinyl polymers other than the above vinyl-based polymer, polyester, polyurethane, natural resins, etc., as far as they contain a carboxyl group.

As the oxide or hydroxide of a divalent metal, an oxide or hydroxide of copper, zinc, calcium, magnesium or iron, e.g., zinc oxide, is employed, and an oxide or hydroxide of zinc is preferably employed.
As the polar solvent, an alcohol-based solvent such as butanol, a ketone-based solvent, an ester-based solvent or an ether-based solvent is employed.

The (meth)acrylic acid hydroxy metal salt-based copolymer obtained as above has a number-average molecular weight (Mn, measured by GPC, in terms of polystyrene, the same shall apply hereinafter) of usually 1,000 to 50,000, preferably 3,000 to 20,000, a glass transition temperature (Tg) of -10°C to +60°C, preferably +10°C to +40°C, and an acid value of 80 to 200.

The (meth)acrylic acid hydroxy metal salt-based copolymer is desirably contained as a resin component in an amount of usually 1 to 99% by weight, preferably 10 to 70% by weight, in the antifouling paint composition. When the (meth)acrylic acid hydroxy metal salt-based copolymer is contained in an amount of usually 1 to 99% by weight, preferably 10 to 70% by weight, in the antifouling paint composition, a surface of the resulting coating film tends to have long-term and stable erodibility and antifouling property.

The (meth)acrylic acid metal salt-based copolymer (b) containing no hydroxyl group bonded to a metal atom, which is employable in the invention, has long-term slight-water-solubility as a vehicle component and has a function of imparting long-term antifouling property to a coating film. The (meth)acrylic acid metal salt-based copolymer is, for example, such a copolymer as described in Japanese Patent Laid-Open Publication No. 171066/1993, which is obtained by copolymerizing a (meth)acrylic acid metal salt (i) as a polymerizable monomer, a monomer (ii) copolymerizable with the (meth)acrylic acid metal salt and having a hydroxyl group and/or an amino group, and another monomer (iii) copolymerizable with the monomers (i) and (ii), and contains constituent units derived from the (meth)acrylic acid metal salt (i) in amounts of usually 2 to 30% by weight, constituent units derived from the monomer (ii) having a hydroxyl group and/or an amino group in amounts of 2 to 30% by weight and constituent units derived from the monomer (iii) in the residual amounts, i.e., 40 to 96% by weight, with the proviso that the total amount ((i)+(ii)+(iii)) is 100% by weight.

Examples of metals to constitute the (meth)acrylic acid metal salts include metals of Ib, IIa, IIb, IIIa, IIIb, IVa, IVb, Va, Vb, VIb, VIIb and VIII Groups, specifically, divalent or higher metals, such as Cu, Zn, Ni, Co, Pb, Al, Sn and Mg.
Examples of such (meth)acrylic acid metal salts include zinc methacrylate ((CH₂=C(CH₃)-COO-)₂Zn), zinc acrylate ((CH₂=CH-COO-)₂Zn), magnesium methacrylate ((CH₂=C(CH₃)-COO-)₂Mg), magnesium acrylate ((CH₂=CH-COO-)₂Mg), copper methacrylate ((CH₂=C(CH₃)-COO-)₂Cu) and copper acrylate ((CH₂=CH-COO-)₂Cu).

The vinyl-based monomer (ii) having a hydroxyl group and/or an amino group may be a monomer, a dimer, a trimer or the like provided that it has any one of a hydroxyl group and an amino group, and is specifically a monomer having one hydroxyl group, such as 2-hydroxyethyl (meth)acrylate, 2-hydroxypropyl (meth)acrylate, 3-hydroxypropyl (meth)acrylate or 2-hydroxybutyl (meth)acrylate. Further, there can be mentioned an adduct of 2-hydroxyethyl (meth)acrylate with ethylene oxide, propylene oxide, γ-butyrolactone, ε-caprolactone or the like; a dimer or a trimer, such as 2-hydroxyethyl (meth)acrylate or 2-hydroxypropyl (methe)acrylate; and a monomer having plural hydroxyl groups, such as glycerol (meth)acrylate.

The monomer having an amino group may be a monomer having any of primary to tertiary amino groups. Examples of such monomers include primary or secondary amino group-containing monomers, such as (meth)acrylamide and butylaminoethyl (meth)acrylate; dimethylaminoethyl (meth)acrylate, diethylaminoethyl (meth)acrylate, dimethylaminopropyl (meth)acrylate, dimethylaminobutyl (meth)acrylate, dibutylaminoethyl (meth)acrylate, dimethylaminoethyl (meth)acrylamide and dimethylaminopropyl (meth)acrylamide. Moreover, there can be mentioned heterocyclic basic monomers, such as vinylpyrrolidone, vinylpyridine and vinylcarbazole.

The "another monomer (iii)" copolymerizable with at least one of the (meth)acrylic acid metal salt (i) and the monomer (ii) may be an aliphatic, alicyclic or aromatic monomer. Examples of (meth)acrylic esters include:
aliphatic monomers, such as methyl (meth)acrylate, ethyl (meth)acrylate, n-propyl (meth)acrylate, i-propyl (meth)acrylate, n-butyl (meth)acrylate, i-butyl (meth)acrylate, t-butyl (meth)acrylate, 2-ehtylhexyl (meth)acrylate, lauryl (meth)acrylate, stearyl (meth)acrylate and glycidyl (meth)acrylate;
alicyclic monomers, such as cyclohexyl (meth)acrylate and isobornyl (meth)acrylate; and
aromatic monomers, such as phenyl (meth)acrylate and benzyl (meth)acrylate.

Moreover, there can be mentioned carboxylic acids, such as (meth)acrylic acid, itaconic acid, maleic acid and succinic acid; esters derived from these carboxylic acids; styrene, vinyltoluene, α-methylstyrene, (meth)acrylonitrile, vinyl acetate and vinyl propionate.
The above monomers (i), (ii) and (iii) can be each used singly or in combination of two or more kinds.

The (meth)acrylic acid metal salt-based copolymer obtained by copolymerization of the monomers (i), (ii) and (iii) has a number-average molecular weight (Mn, measured by GPC, in terms of polystyrene, the same shall apply hereinafter) of usually 5,000 to 100,000 and has a glass transition temperature (Tg) of about -20°C to +50°C.
The (meth)acrylic acid metal salt-based copolymer (b) is desirably contained as a resin component in an amount of usually 1 to 99% by weight, preferably 10 to 70% by weight, in the antifouling paint composition. When the (meth)acrylic acid metal salt-based copolymer is contained in this amount in the antifouling paint composition, a surface of the resulting coating film tends to have stable and long-term erodibility and antifouling property.

The (meth)acrylic acid metal salt-based copolymer is prepared in accordance with a process described in Japanese Patent Laid-Open Publication No. 171066/1993, and for example, the (meth)acrylic acid metal salt (i), the monomer (ii) having a hydroxyl group and/or an amino group and the "another monomer (iii)" copolymerizable with the monomers (i) and (ii) in amounts corresponding to the amounts of the constituent units in the copolymer have only to be mixed with an organic solvent such as toluene and then subjected to solution polymerization at a temperature of 60 to 180°C for 5 to 14 hours in the presence of a radical polymerization initiator.

### Finish coating for outside board

The finish coating for outside board is as described above in the first method for painting the exterior of a ship.

### Finish coating for boot topping

The finish coating for boot topping is as described above in the first method for painting the exterior of a ship.

### Finish coating for deck

Examples of the finish coatings for deck include oil (alkyd-based) finish coatings, phthalic acid resin-based finish coatings, chlorinated polyolefin-based (rubber chloride-based) finish coatings, vinyl-based finish coatings, acrylic-based finish coatings, epoxy-based finish coatings, urethane-based finish coatings, silicone alkyd-based finish coatings, acrylic silicone-based finish coatings and fluororesin-based finish coatings.

As the finish coating for deck used in the invention, a urethane-based, epoxy-based, acrylic based or chlorinated polyolefin-based (rubber chloride-based) coating is preferable, taking weathering resistance, adhesion and economical advantage into account.
Examples of such finish coatings for deck include "Unimarine" (trade name, available from Chugoku Marine Paints, Ltd., isocyanate crossliking two-pack urethane resin-based finish coating), "Epicon Marine Finish" and "Epicon Marine HB" (both: trade names, available from Chugoku Marine Paints, Ltd., modified polyamidoamine crossliking two-pack epoxy resin-based finish coating), "Ravax Finish" (trade name,'available from Chugoku Marine Paints, Ltd., chlorinated polyolefin-based finish coating), and "Acri 700 Finish" (trade name, available from Chugoku Marine Paints, Ltd., acrylic resin-based finish coating).

### Finish coating for superstructure

Examples of the finish coatings for superstructure include oil (alkyd-based) finish coatings, phthalic acid resin-based finish coatings, chlorinated polyolefin-based (rubber chloride-based) finish coatings, vinyl-based finish coatings, acrylic-based finish coatings, epoxy-based finish coatings, urethane-based finish coatings, silicone alkyd-based finish coatings, acrylic silicone-based finish coatings and fluororesin-based finish coatings.

As the finish coating for superstructure used in the invention, a urethane-based, epoxy-based, acrylic based or chlorinated polyolefin-based (rubber chloride-based) coating is preferable, taking weathering resistance, adhesion and economical advantage into account.
Examples of such finish coatings for superstrucure include "Unimarine" (trade name, available from Chugoku Marine Paints, Ltd., isocyanate crossliking two-pack urethane resin-based finish coating), "Epicon Marine Finish" and "Epicon Marine HB" (both: trade names, available from Chugoku Marine Paints, Ltd., modified polyamidoamine crossliking two-pack epoxy resin-based finish coating), "Ravax Finish" (trade name, available from Chugoku Marine Paints, Ltd., chlorinated polyolefin-based finish coating), and "Acri 700 Finish" (trade name, available from Chugoku Marine Paints, Ltd., acrylic resin-based finish coating).

In each of the above coatings (paints) for use in the invention, components usually added to coatings for ship's outside plating, such as antifouling agent, plasticizer, hydrolysis controlling agent, pigment, solvent, viscosity modifier and other additives, may be contained.
In the second method for plating the exterior of a ship according to the invention, a coating film (cured film) of the above-mentioned each coating such as a primer is formed on the outside plating of a ship by a usual method, such as airless spraying, air spraying, brushing or roller coating. Prior to the primer coating, the outside plating surface may be cleaned to remove deposits thereon, such as rust, grease, moisture, dust, slime and salt, when needed. Further, the above coatings may be used after diluted to proper concentrations with thinner or the like.

The coating weight of each of the above coatings (paints) varies depending upon the type of a ship, the type and combination of a coating to be applied thereon, etc., and is not determined indiscriminately.
However, the anticorrosive coating composition (primer) of the invention is applied onto the whole of the outside plating area (A) of a ship and the whole of the surface of the exposed area (B) on the upper side of a deck in an amount of, for example, 100 to 500 g/m² and in a thickness of about 50 to 500 µm, and its dry film thickness is in the range of about 30 to 300 µm;
the organotin-free hydrolyzable antifouling paint is applied onto the primer layer on the bottom (i) and the boot topping (ii) of the ship's outside plating in an amount of, for example, 200 to 800 g/m² and in a thickness of about 50 to 500 µm, and its dry film thickness is in the range of about 30 to 300 µm;
the urethane coating is applied onto the primer layer on the outside board (iii) of the ship's outside plating in an amount of, for example, 50 to 300 g/m² and in a thickness of about 40 to 300 µm, and its dry film thickness is in the range of about 30 to 150 µm;
the urethane coating is applied onto the primer layer on the deck (iv) of a ship in an amount of, for example, 50 to 300 g/m² and in a thickness of about 40 to 300 µm, and its dry film thickness is in the range of about 30 to 150 µm; and
the urethane coating is applied onto the primer layer on the superstructure (v) of a ship in an amount of, for example, 50 to 300 g/m² and in a thickness of about 40 to 300 µm, and its dry film thickness is in the range of about 30 to 150 µm.

In the airless spraying, the coating conditions are set to, for example, a primary (air) pressure of about 4 to 8 kgf/cm², a secondary (paint) pressure of about 100 to 180 kgf/cm² and a gun traveling rate of about 50 to 120 cm/sec.
The number of coating times of each coating is not specifically restricted and can be properly determined according to the paint concentration, the desired thickness, etc., so that the coating may be carried out once or plural times.

Examples of ships on which the above paint (coating) is applied and cured so as to give the above thickness (painted ships) include metal ships, such as tanker, cargo boat, passenger boat, fishing boat, barge and floating dock.
In the present invention, the anticorrosive coating composition having excellent capability of being coated with various finish coatings is used as a primer for the outside plating area (A) and the exposed area (B) on the upper side of a deck, so that an effect of drastically reducing the kinds of the paints used for the whole ship is exerted.

In the present invention, by coating, in addition to the outside plating area (A) and the exposed area (B) on the upper side of a deck, the hold and the ballast tank with the same primer for undercoating (anticorrosive coating composition of the invention) and then coating them with the same primer for finish coating (anticorrosive coating composition of the invention), the effect of the invention can be much more expected.

### Anticorrosive coating film

The anticorrosive coating film of the invention is formed from the high-solids anticorrosive coating composition of the invention, or it is formed from the high-solids rapid-curing anticorrosive coating composition of the invention.

### Painted ship

The first painted ship of the invention is a ship coated with an anticorrosive coating film formed from the high-solids anticorrosive coating composition of the invention or the high-solids rapid-curing anticorrosive coating composition of the invention. The first painted ship of the invention is preferably a ship coated with a coating film formed by the first or the second method for painting the exterior of a ship according to the invention using the high-solids anticorrosive coating composition.

The second painted ship of the invention is preferably a ship coated.with a coating film formed by the method comprising forcedly feeding the main agent component (A) and the curing agent component (B) for constituting the high-solids rapid-curing anticorrosive coating composition to a static mixer through different feed pipes, mixing them, then guiding the resulting high-solids rapid-curing anticorrosive coating composition to a spray gun and coating a base surface with the composition.

The painted part of a ship coated with a coating film formed from the high-solids rapid-curing anticorrosive coating composition is preferably a cargo tank or a ballast tank of a ship. Such a painted part inside a ship is not usually intended to be repeatedly coated with various coatings as in the case of the exterior of a ship.

### Underwater structure

The underwater structure of the invention is an underwater structure coated with an anticorrosive coating film formed from the high-solids anticorrosive coating composition or the high-solids rapid-curing anticorrosive coating composition of the invention.

Examples of the underwater structures include water feed or drainage openings of steam power or atomic power plants, floodgates, bridge piers and port facilities.

### EXAMPLES

The present invention is further described with reference to the following examples, but it should be construed that the invention is in no way limited to those examples. Examples 1 to 13 and 16 to 18 are not in accordance with the invention.

### Examples 1 to 15, Comparative Examples 1 to 4

### Preparation example of high-solids anticorrosive coating composition

Main agent components and curing agent components of anticorrosive coating compositions were prepared in accordance with formulations shown in Tables 1 and 2. In the preparation of the high-solids anticorrosive coating compositions of Examples 1 to 15, the main agent component was prepared by sufficiently dispersing a blend by a paint shaker using glass beads, and the curing agent component was prepared by homogeneously mixing a blend by a high-speed dispersing machine.

In the painting with the high-solids anticorrosive coating composition, the main agent component and the curing agent component were mixed in a weight ratio shown in Tables 1 and 2, prior to use.

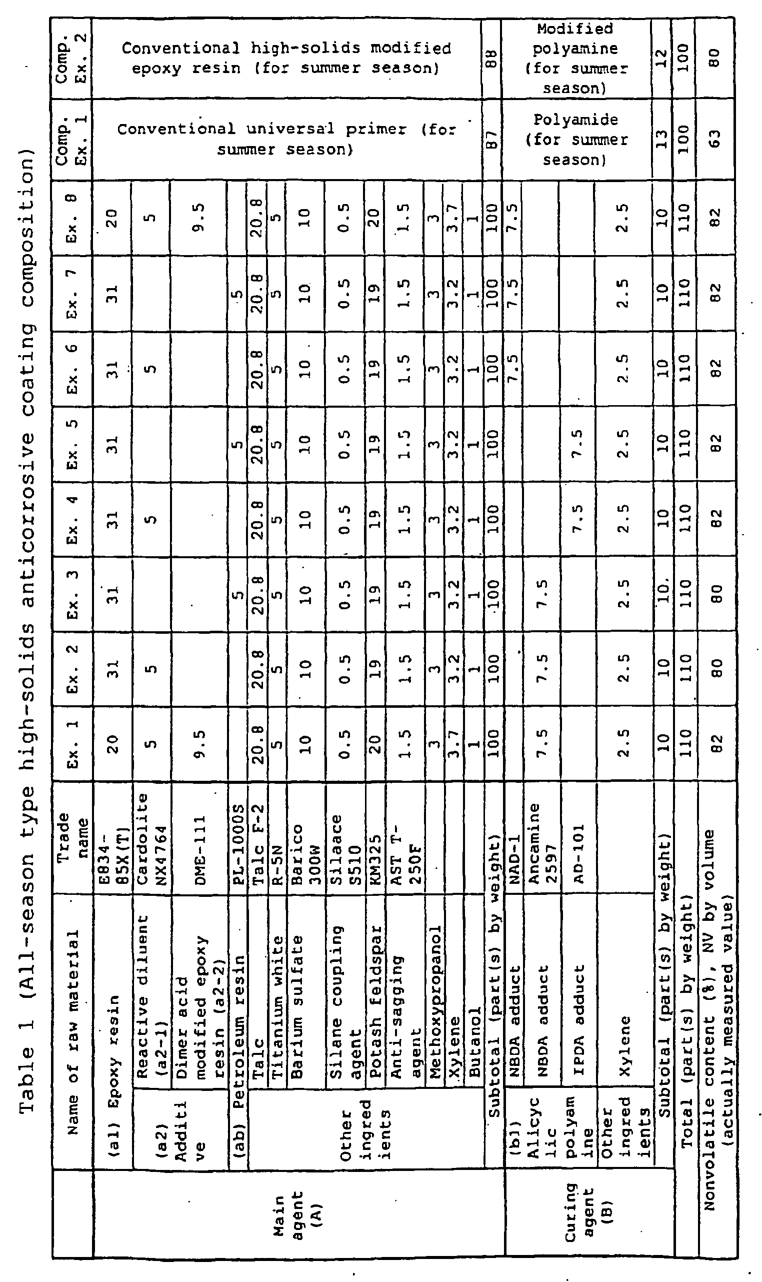

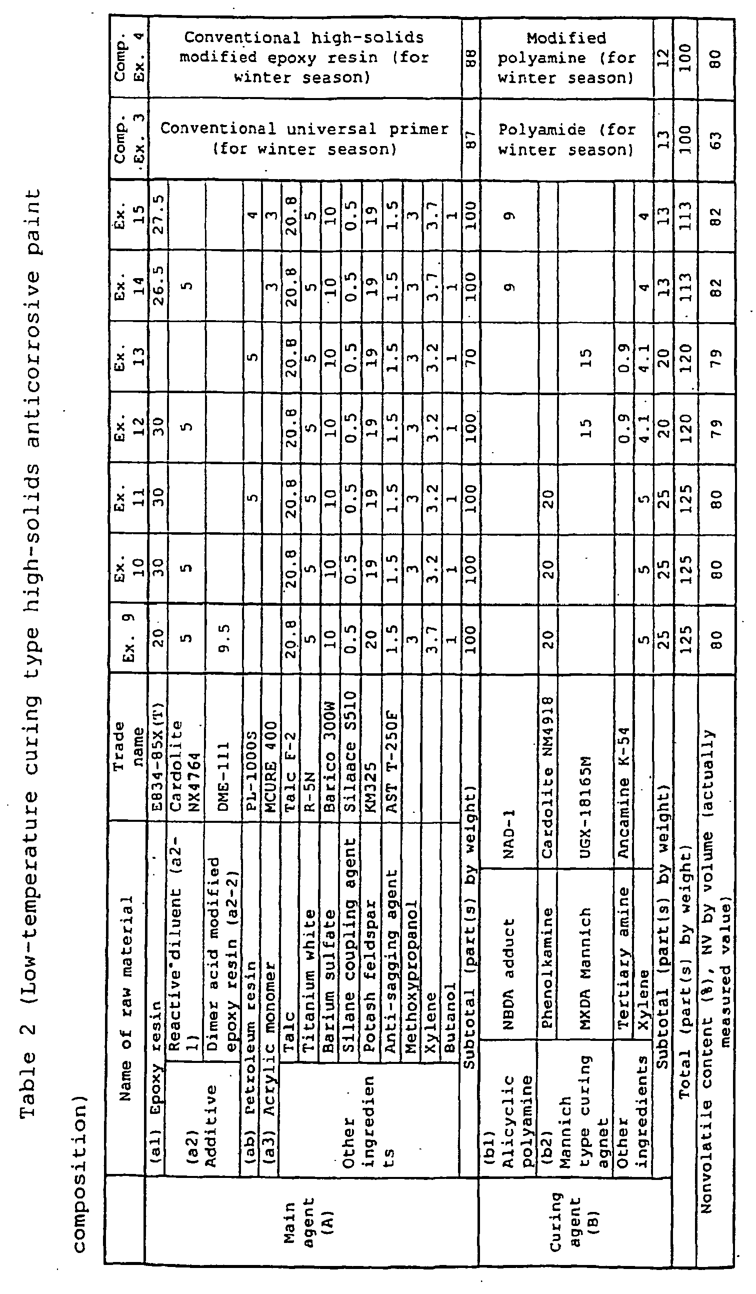

Raw materials used and samples

### Raw materials used

### (a1) Epoxy resin

"Epicoat 834-85X" (bispenol A type epoxy resin (semi-solid at ordinary temperature), available from Yuka-Shell Epoxy Co., Ltd., epoxy equivalent: 290 to 310, xylene-cut product, NV: 85%)

### (a2) Additive

### (a2-1) Reactive diluent

"Cardolite NX4764" (alkylphenol glycidyl ether, available from Cardolite Corporation, epoxy equivalent: 400)

### (a2-2) Modified epoxy resin

"DME-111" (dimer acid modified epoxy resin, available from Ohtake-Meishin Chemical Co., Ltd., epoxy equivalent: 245 to 275, xylene-cut product, NV: 90%)

### (ab) Coating film modifier (petroleum resin)

"HILENOL PL-1000S" (C9 fraction petroleum resin, available from KOLON Chemical Co., Ltd.)

### (a3) Acrylate monomer

"M-CURE 400" (tetrafunctional aliphatic acrylate, equivalent: 80 to 90, available from SARTOMER COMPANY, INC.)

### (b1) Alicylcic amine-based curing agent

Adduct of norbornanediamine with epoxy resin (NBDA adduct)

"Ancamine 2597" (available from Air Products and Chemicals, Inc., active hydrogen equivalent: 90)

"NAD-1" (available from Ohtake-Meishin Chemical Co., Ltd., active hydrogen equivalent: 96)

Adduct of isophoronediamine with epoxy resin (IPDA adduct)

"AD-101" (available from Ohtake-Meishin Chemical Co., Ltd., active hydrogen equivalent: 96)

### (b2) Mannich type curing agent

"MAD204(A)" (MXDA Mannich polyamine, condensate of metaxylenediamine, formaldehyde and phenol, available from Ohtake-Meishin Chemical Co., Ltd.)

"Cardolite NX4918" (Phenolkamine adduct, available from Cardolite Corporation)

### Other ingredients

### Talc

"F-2 Talc" (general talc, available from Fuji Talc Industrial Co., Ltd.)

### Titanium white

"Titanium White R-5N" (available from Sakai Chemical Industry Co., Ltd., titanium dioxide)

### Silane coupling agent

"KBM403" (γ-glycidoxypropyltrimethoxysilane, Shin-Etsu Chemical Co., Ltd.)

### Potash feldspar

"Potash Feldspar KM325" (available from Commercial Minerals, Inc.)

### Anti-sagging agent

"ASA T-250F" (available from Ito Seiyu K.K.)

### Curing accelerator

"Ancamine K-54" (available from Air Products and Chemicals, Inc., 2,4,6-tri(dimethylaminomethyl)phenol)

### Samples (used in Comparative Examples 1 to 4)

### Main agent for summer season

"Bannoh 500 Gray Main Agent" (product name, universal primer (for summer season), available from Chugoku Marine Paints, Ltd.)

"Nova 2000 Light Gray Main Agent" (product name, high-solids modified epoxy (for summer season), available from Chugoku Marine Paints, Ltd.)

### Curing agent for summer season

"Bannoh 500 Curing Agent" (product name, polyamide (for summer season), available from Chugoku Marine Paints, Ltd.)

"Nova 2000 Curing Agent" (product name, modified polyamine (for summer season), available from Chugoku Marine Paints, Ltd.)

### Main agent for winter season

"Bannoh 500 Gray Main Agent" (product name, universal primer (for winter season), available from Chugoku Marine Paints, Ltd.)

"Nova 2000 Light Gray Main Agent" (product name, high-solids modified epoxy (for winter season), available from Chugoku Marine Paints, Ltd.)

### Curing agent for winter season

"Bannoh 500 QD Curing Agent" (product name, polyamide (for winter season), available from Chugoku Marine Paints, Ltd.)

"Nova 2000 QD Curing Agent" (product name, modified polyamine (for winter season), available from Chugoku Marine Paints, Ltd.)

Using the high-solids anticorrosive coating compositions of the examples and the comparative examples prepared as above, the following tests were carried out. The test results are set forth in Tables 3 to 6.

### Test methods

### (1) Test method and evaluation criteria of curability

A tin plate was coated with the paint composition by an applicator so that a dry film thickness should become 200 µ, and the time required for enabling walking thereon at each temperature (20°C, 0°C) was measured (in accordance with JIS K-5600 3-3). In Examples 16 to 18 and Comparative Example 5, the measurement was carried out at 20°C and 5°C.

### (2) Test method and evaluation criteria of pot life

The time required for that the viscosity of the sample (paint composition) of 200 g became 3 times the initial viscosity at 20°C was measured (in accordance with JIS K-5600 2-6).

### (3) Test method and evaluation criteria of pencil hardness

A tin plate was coated with the paint composition by an applicator so that a dry film thickness should become 200 µ and then dried. The resulting test plate was immersed in warm water of 40°C for 90 days and then scratched with a lead of a pencil to examine a hardness of the coating film, and the hardness was represented by a pencil hardness mark (in accordance with JIS K-5600 5-4).

### (4) Test method and evaluation criteria of flexing resistance

A tin plate was coated with each of various anticorrosive paints obtained in the examples and the comparative examples by air spraying so that a dry film thickness should become about 200 µ and then dried in an atmosphere of 23°C and 65%RH for 7 days to prepare a test plate. The test plate had a size of 150 mm × 50 mm × 0.3 mm (without hole). After the painted test plate was allowed to stand for 7 days at 23°C, flexing resistance of the test plate was measured in accordance with JIS K-5600 5-1 and evaluated based on the following evaluation criteria.

### Evaluation criteria

AA: Neither crack nor peeling was observed.
BB: Fine crack was observed but peeling was not observed.
CC: Peeling was observed.

### (5) Test method and evaluation criteria of impact resistance

A test plate (material: steel SS-400) of 150 mm × 70 mm × 2.3 mm (without hole) having been subjected to sand blasting was subjected to an impact resistance test in accordance with the ISO-6272 Dupont system using an impact tester (trade name: Dupont Impact Tester, manufactured by Taiyu Kizai K.K.) under the conditions of 1/4 inch, 1 kg and 50 cm, and the impact resistance was evaluated based on the following criteria.

### Evaluation criteria

AA: peel diameter of less than 12 mm
BB: peel diameter of not less than 12 mm and less than 18 mm
CC: peel diameter of not less than 18 mm

### (6) Test method and evaluation criteria of salt water resistance

The test plate used in "(5) Test of impact resistance" was used, and the lower part of the test plate was provided with a cut line reaching the base. Then, the test plate was immersed in 3% salt water at 40°C for 90 days (3M), and after a lapse of 30 days and a lapse of 90 days, an appearance of the coating film was observed and evaluated based on the following criteria (in accordance with JIS K-5600 6-1).

### Evaluation criteria

AA: Regarding blister, crack, rust, peeling and hue, any change is not observed.

BB: Regarding any one of blister, crack, rust, peeling and hue, a little defect (change) is observed.
CC: Any one of blister, crack, rust, peeling and change of hue apparently takes place.

### (7) Test method and evaluation criteria of electric anticorrosion property

The test plate used in "(5) Test of impact resistance" was used. The test plate was immersed in 3% salt water at 40°C for 90 days (3M) in accordance with ASTM G-8, and electric anticorrosion property was evaluated based on the following criteria.

### Evaluation criteria

AA: Regarding blister, crack, rust, peeling and hue, any change is not observed.
BB: Regarding any one of blister, crack, rust, peeling and hue, a little defect (change) is observed.
CC: Any one of blister, crack, rust, peeling and change of hue apparently takes place.

### (8) Test method and evaluation criteria of resistance to high temperature and high humidity

The test plate used in "(5) Test of impact resistance" was used. The test plate was held in a tester at a temperature of 50°C and a humidity of 95% for 90 days (3M), and every 30 days, an appearance of the coating film was observed and evaluated based on the following criteria (in accordance with JIS K-5600 7-2).

### Evaluation criteria

AA: Regarding blister, crack, rust, peeling and hue, any change is not observed.

BB: Regarding any one of blister, crack, rust, peeling and hue, a little defect (change) is observed.
CC: Any one of blister, crack, rust, peeling and change of hue apparently takes place.

### (9) Test method and evaluation criteria of resistance to water of temperature difference

The test plate used in "(5) Test of impact resistance" was used. The test plate was immersed in such an immersion tank that the coated surface of the test plate should be brought into contact with warm water of 50°C and the back surface thereof should be brought into contact with water of 20°C. After 4 days, 7 days and 10 days, an appearance of the coating film was evaluated. For evaluating an appearance of the coating film, size of blister and degree of occurrence thereof were evaluated based on the following criteria and expressed by an ASTM classification mark (ASTM D 714-56). In Examples 16 to 18 and Comparative Example 5, an appearance of the coating film was evaluated after 1 day, 3 days and 7 days from the immersion.

### Evaluation criteria

### Size

No. 10: none
No. 8: smallest size
No. 6: medium size
No. 4: large size

### Degree of occurrence

D: dense
MD: medium dense
M: medium
F: few

The test strip was immersed for 14 days in all. Then, an X-shaped cut was made on the coating film of the test strip with a knife, and adhesion was evaluated based on the following criteria (in accordance with JIS K-5400 6-18.5.3).

### Evaluation criteria

AA: Peeling of the coating film was not observed. (excellent adhesion)
BB: Peeling of the coating film was partially observed.

CC: Peeling of the coating film took place. (bad adhesion)

### (10) Test method and evaluation criteria of A heavy oil + salt water immersion test

The test plate used in "(5) Test of impact resistance" was used. The test plate was placed in a container containing equal amounts of an A heavy oil and 3% salt water, at 60°C for 90 days (3M)^{·}. After the immersion, the test plate was pulled up, and adhesion of the coating film and corrosion of the base were visually observed and evaluated based on the following criteria.

### Evaluation criteria

AA: Adhesion was excellent, and rust was not observed on the base.
BB: Adhesion was excellent, but rust was observed on the base.
CC: Adhesion was bad, and rust was observed on the base.

### (11) Finish coating properties after interval

The anticorrosive coating composition was sprayed by an air sprayer, dried and immediately subjected to outdoor exposure. After an interval of a given time, the following finish coating was applied. The resulting test plate was dried at room temperature for 7 days and then immersed in salt water for 1 month. After the test plate was pulled up, a cross-cut adhesion test was carried out, and interlaminar adhesion was evaluated based on the following criteria.

Cross-cut adhesion test (in accordance with JIS K5400 8.5.2): Cuts reaching the base were made at intervals of 2 mm so as to form 25 squares. Onto the squares, a cellophane tape was attached. Then, one end of the tape was peeled at an angle of about 45°, and peeling (peeling ratio) of the coating film was observed.

### Evaluation criteria

AA: Peeling was not observed at all.

AB: Peeling of less than 15% of the whole area was observed.
BB: Peeling of not less than 15% and less than 35% of the whole area was observed.
BC: Peeling of not less than 35% and less than 60% of the whole area was observed.
CC: Peeling of not less than 60% of the whole area was observed.

### Finish coating

"Unimarine 700" (available from Chugoku Marine Paints, Ltd., isocyanate crossliking two-pack urethane resin-based finish coating)

"Epicon Marine Finish" (available from Chugoku Marine Paints, Ltd., modified polyamidoamine crossliking two-pack epoxy resin-based finish coating)

"Bannoh 500N" available from Chugoku Marine Paints, Ltd., epoxy binder for AF)

**Table 3 (Evaluation of coating film properties of high-solids universal primer)**

| Test No. | | | Ex. 1 | Ex. 2 | Ex. 3 | Ex. 4 | Ex. 5 | Ex. 6 | Ex. 7 | Ex. 8 | Comp. Ex. 1 | Comp. Ex. 2 | Remarks |
|---|---|---|---|---|---|---|---|---|---|---|---|---|---|
| (1) Curability (DFT: 200 µm) (time required for enabling walking) | | 20°C | 6 | 6 | 7 | 12 | 12 | 5 | 5 | 5 | 10 | 15 | in accordance with JIS K-5600 3-3 |
| | | 0°c | 32 | 32 | 36 | 48 | 48 | 32 | 32 | 32 | - | - | |
| (2) Pot life (hrs) | | 20°c | 3 | 3 | 3 | 3 | 3 | 2 | 2 | 2 | 7 | 2 | in accordance with JIS K-5600 2-6 |
| (3) Pencil hardness (after immersion of 40°C×3M) | | | H | 2H | 2H | 2H | 2H | 2H | 2H | H | H | 2H | in accordance with JIS K-5600 5-4 |
| (4) Flexing resistance (23°C×7days) | | | AA | AA | AA | AA | AA | AA | AA | AA | AA | AA | in accordance with JIS K-5600 5-1 |
| (5) Impact resistance (1/4 inch, 1kg×50cm) | | | AA | AA | AA | AA | AA | AA | AA | AA | AA | AA | ISO 6272 Dupont system |
| [Anticorrosion property] | | | AA | AA | AA | AA | AA | AA | AA | AA | AA | AA | in accordance with JIS K-5600 6-1 |
| (6) Anticorrosion property - Salt water immersion (3% NaCl water, 40°C×3M) | | | AA | AA | AA | AA | AA | AA | AA | AA | AA | AA | |
| (7) Electric anticorrosion (3% salt water, 40°C×3M) | | | AA | AA | AA | AA | AA | AA | AA | AA | AA | AA | in accordance with ASTM G-8 |
| (8) High temperature and high humidity (40°C/95%×3M) | | | AA | AA | AA | AA | AA | AA | AA | AA | AA | AA | in accordance with JIS K-5600 7-2 |
| (9) Temperature difference test | | 4D | 10 | 10 | 10 | 10 | 10 | 10 | 10 | 10 | 10 | 10 | Coating film appearance (blister) was evaluated by ASTM-D714. |
| | Test surface (50°c) | 7D | 10 | 10 | 10 | 10 | 10 | 10 | 10 | 10 | 10 | 10 | |
| | Back surface (20°C) Back surface | 10D | 10 | 10 | 10 | 10 | 10 | 10 | 10 | 10 | 10 | 10 | |
| (temperature difference: 30°C) | | adhe sion | AA | AA | AA | AA | AA | AA | AA | AA | AA | AA | |
| (10) A heavy oil + salt water (60°C) | | | CC | BB | AA | BB | AA | AA | AA | AA | AA | AA | |

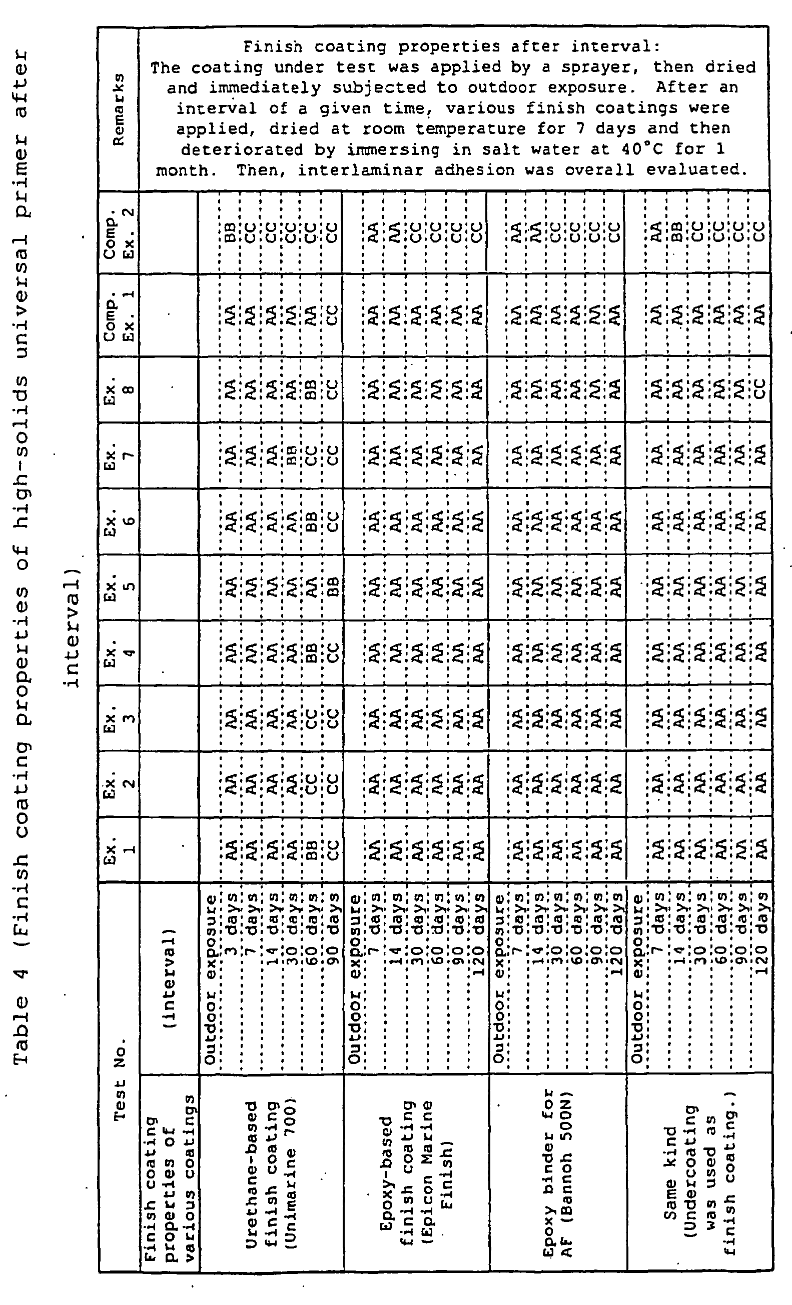

**Table 5 (Evaluation of coating film properties of low-temperature curing type high-solids universal primer)**

| Test No. | | | Ex. 9 | Ex. 10 | Ex. 11 | Ex. 12 | Ex. 13 | Ex. 14 | Ex. 15 | Comp. Ex. 3 | Comp. Ex. 4 | Remarks |
|---|---|---|---|---|---|---|---|---|---|---|---|---|
| (1) Curability (DFT: 200 µm) (time required for enabling walking) | | 20°C | 5 | 5 | 5 | 6 | 6 | 4 | 4 | 6 | 7 | in accordance with JIS K-5600 3-3 |
| | | 0°c | 25 | 25 | 25 | 29 | 30 | 15 | 15 | 24 | 36 | |
| (2) Pot life (hrs) | | 20°c | 1.5 | 1.5 | 1.5 | 1.5 | 1.5 | 1.0 | 1.0 | 3 | 2 | in accordance with JIS K-5600 2-6 |
| (3) Pencil hardness (after immersion of 40°C×3M) | | | H | H | H | 3H | 3H | 2H | 2H | H | H | in accordance with JIS K-5600 5-4 |
| (4) Flexing resistance (23°C×7days) | | | AA | AA | AA | CC | CC | AB | AB | AB | CC | in accordance with JIS K-5600 5-1 |
| (5) Impact resistance (1/4 inch, 1kg×50cm) | | | AA | AA | AA | BB | BB | AA | AA | AA | BB | ISO 6272 Dupont system |
| [Anticorrosion property] | | | | | | | | | | | | in accordance with JIS K-5600 6-1 |
| (6) Anticorrosion property - Salt water immersion (3% NaCl water, 40°C×3M) | | | AA | AA | AA | BB | AA | AA | AA | AA | AA | |
| (7) Electric anticorrosion (3% salt water, 40°C×3M) | | | AA | AB | AA | BB | AA | AA | AA | AA | AA | in accordance with ASTM G-8 |
| (8) High temperature and high humidity (40°C/95%×3M) | | | AA | AA | AA | BB | BB | AA | AA | AA | AA | in accordance with JIS K-5600 7-2 |
| (9) Temperature difference test | | 4D | 10 | 10 | 10 | 10 | 10 | 10 | 10 | 10 | 10 | Coating film appearance (blister) was evaluated by ASTM-D714. |
| | Test surface (50°c) | 7D | 8F | 8F | 8F | 10 | 10 | 10 | 10 | 10 | 10 | |
| | Back surface (20°C) Back surface | 10D | 8F | 8F | 8F | 10 | 10 | 10 | 10 | 10 | 10 | |
| (temperature difference: 30°C) | | adhe sion | BB | BB | BB | AA | AA | AA | AA | AA | BB | |
| (10) A heavy oil + salt water (60°C) | | | AA | AA | AA | BB | BB | BB | BB | AA | AA | |

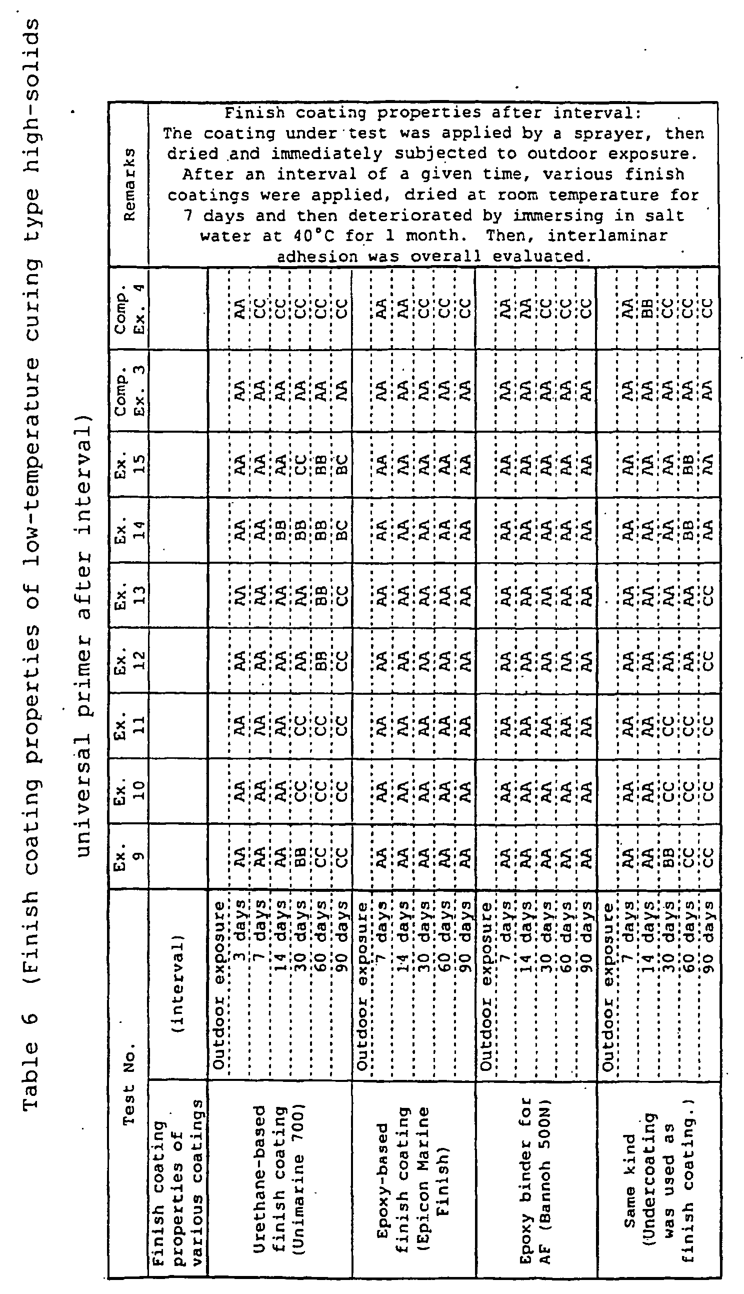

### Examples 16 to 18, Comparative Example 5

### Preparation example of high-solids rapid-curing anticorrosive coating composition

Main agent components and curing agent components of anticorrosive coating compositions were prepared in accordance with formulations shown in Table 7. In the preparation of the high-solids rapid-curing anticorrosive coating compositions of Examples 16 to 18, the main agent component and the curing agent component were each prepared by homogeneously mixing a blend by a high-speed dispersing machine.

In the painting with the high-solids rapid-curing anticorrosive coating composition, the main agent component and the curing agent component were mixed in a weight ratio shown in Table 7, prior to use.
The high-solids rapid-curing anticorrosive coating compositions were subjected to various property tests in the same manner as in Example 1. (In these tests, the points different from those of the tests in Example 1 are described in the above descriptions of the test methods and in Tables 7 to 9 and their "Notes (Tables 7 to 9)".

The test results are set forth in Table 8 and 9. -

**Table 7 (High-solids rapid-curing anticorrosive paint composition)**

| | Name of raw material | | Trade name | Ex. 16 | Ex. 17 | Ex. 18 | Comp. Ex. 5 |
|---|---|---|---|---|---|---|---|
| | (a1) Epoxy resin | | AER260 | 43.7 | 43 | 42.9 | Conventional non-solvent coating |
| | (a2) Additive | Reactive diluent (a2-1) | Epodil 759 | 13.5 | 13.3 | 13 | |
| | (a3) Acrylic monomer | | MCURE 400 | | | 2.6 | |
| | Other ingredients | Potash feldspar | KM325 | 24 | 25 | 22.9 | |
| | | Barium sulfate | Barico 300W | 2 | 2 | 2 | |
| Main agent (A) | | Titanium white | R-5N | 7 | 7 | 7 | |
| | | Silane coupling agent | Silaace S510 | 1.4 | 1.4 | 1.4 | |
| | | Anti-sagging agent | AST T-250F | 2.6 | 2.6 | 2.6 | |
| | | Mica | Suzorite Mica 200-HK | 5.5 | 5.4 | 5.3 | |
| | | High-boiling point solvent | Benzyl Alcohol | 0.3 | 0.3 | 0.3 | |
| | Subtotal (part(s) by weight) | | | 100 | 100 | 100 | 88 |
| | (b1) Alicyclic polyamine | NBDA adduct | NAD-1 | | 12 | | Modified polyamine |
| | | NBDA adduct | SUNMIDE NB-905 | | | 22 | |
| | (b2) Mannich type curing agnet | MXDA Mannich | WH-039 | 21.55 | 12 | | |
| | (ab) Petroleum resin | | Necires EPX-L2 | 27.45 | 27.1 | 27 | |
| | Other ingredients | Tertiary amine | Ancamine K-54 | 0.4 | 0.55 | 0.68 | |
| Curing agent (B) | | Potash feldspar | KM325 | 28 | 25.95 | 27.97 | |
| | | Barium sulfate | Barico 300W | 10.5 | 10.3 | 10.25 | |
| | | Carbon black | Carbon Black MA-100 | 0.1 | 0.1 | 0.1 | |
| | | Anti-sagging agent | AST T-250F | 1 | 1 | 1 | |
| | | Mica | Suzorite Mica 200-HK | 4 | 4 | 4 | |
| | | High-boiling point solvent | Benzyl Alcohol | 7 | 7 | 7 | |
| | Subtotal (part(s) by weight) | | | 100 | 100 | 100 | 12 |
| Total (part(s) by weight) | | | | 200 | 200 | 200 | 100 |
| Nonvolatile content (%), NV by volume (actually measured value) | | | | 100 | 100 | 100 | 100 |

**Table 8 (Test results)**

| Test No. | | | Ex. 16 | Ex. 17 | Ex. 18 | Comp. Ex. 5 |
|---|---|---|---|---|---|---|
| (1) Curability (DFT: 200 µm) (time required for enabling walking) | | 20°c | 4.5 | 6 | 7.5 | 24 |
| | | 5°c | 20.5 | 22.5 | 25 | 120 |
| (2) Pot life (min.) | | 20°c | 20 | 30 | 20 | 60 |
| (3) Pencil hardness (after immersion of 40°C×3M) | | | 2B | 2B | 2B | HB |
| (4) Flexing resistance (23°C×7days) | | | AA | AA | AA | AA |
| (5) Impact resistance (1/4 inch, 1kg×50cm) | | | AA | AA | AA | AA |
| [Anticorrosion property] | | | | | | |
| (6) Salt water immersion (3% NaCl water, 40°C×3M) | | | AA | AA | AA | AA |
| (7) Electric anticorrosion (3% salt water, 40°C×3M) | | | AA | AA | AA | AA |
| (8) High temperature and high humidity (40°C/95%×3M) | | | AA | AA | AA | AA |
| (9) Temperature difference test | | 1D | 10 | 10 | 10 | 10 |
| | Temperature Test surface (50°c) | 3D | 10 | 10 | 10 | 10 |
| | Back surface (20°C) | 7D | No.6 D | No.6 D | No.6 D | No.8 D |
| (temperature difference: 30°C) | | adhesion | CC | CC | CC | CC |

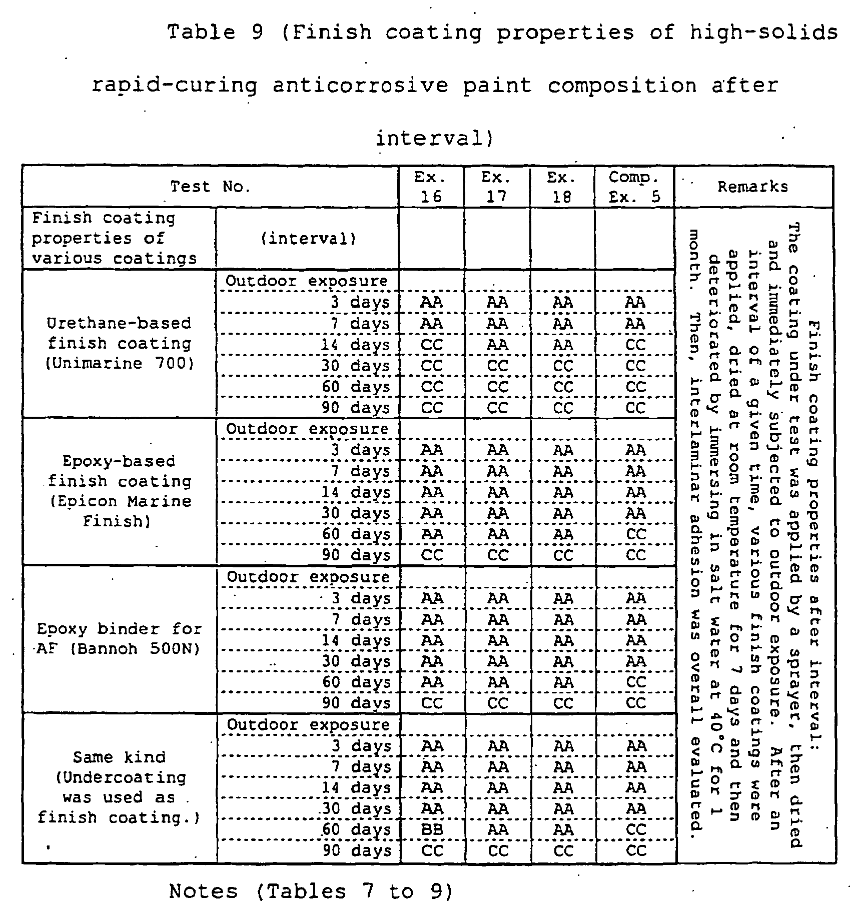

Notes (Tables 7 to 9)

### Raw materials used

### (a1) Epoxy resin

"AER260" (bisphenol A type epoxy resin (liquid at ordinary temperature, available from Asahi Kasei Epoxy Co., Ltd., epoxy equivalent: 190, NV: 100%)

### (a2) Additive

### (a2-1) Reactive diluent

"Epodil 759" (alkyl(C12-C13) glycidyl ether, available from Air Products and Chemicals, Inc., epoxy equivalent: 285)

### (ab) Petroleum resin

"Necires EPX-L2" (indene-styrene-based, available from Nevcin Polymers Co.)

### (b1) Alicyclic amine-based curing agent

adduct of norbornanediamine with epoxy resin (NBDA adduct)
(i) "NAD-7" (available from Ohtake-Meishin Chemical Co., Ltd., active hydrogen equivalent: 140)

(ii) "SUNMIDE NB-905" (available from Air Products and Chemicals, Inc., active hydrogen equivalent: 90)

### (b2) Mannich type curing agent

"WH-039" (MXDA Mannich polyamine, available form Dainippon Ink & Chemicals Inc., active hydrogen equivalent: 98)

### Other ingredients

(i) mica (trade name: Suzorite Mica 200HK, available from Kuraray Co., Ltd.)
(ii) benzyl alcohol (available from Tosoh Corporation, boiling point: 205.45°C)
(iii) carbon black ("MA-100", available from Mitsubishi Chemical Corporation)
(iv) "Silane S-510" (silane coupling agent, available from Chisso Corporation)
(v) anti-sagging agent (trade name: ASA T-250F, available from Ito Seiyu K.K.)
(vi) tertiary amine (trade name: Ancamine K-54, available from Air Products and Chemicals, Inc.)
(vii) potash feldspar (trade name: KM-325, available from Commercial Minerals, Inc.)
(viii) barium sulfate (trade name: Barico 300W, available from Hakusui Chemical Industries, Ltd.)

### Comparative Example 5

(i) "Nova 5000 Light Gray Main Agent" (general name of product, solvent-free epoxy coating, available from Chugoku Marine Paints, Ltd.)
(ii) "Nova 5000 Curing Agent" (general name of product, solvent-free amine curing agent (modified polyamine), available from Chugoku Marine Paints, Ltd.)

## Claims

1. A low-temperature curing type high-solids anticorrosive coating composition comprising:
(A) a main agent component comprising
(a1) an epoxy resin and
(a3) a polymerizable (meth)acrylate monomer, and
(B) a curing agent component comprising
(b1) an adduct of norbomanediamine with an epoxy resin,
wherein the main agent component (A) and/or the curing agent component (B) comprises at least one of the following additive (a2) and the following coating film modifier (ab):
(a2) at least one additive selected from the group consisting of
(a2-1) a reactive diluent having an epoxy group and
(a2-2) a dimer acid modified epoxy resin and/or an epoxy resin in which an aromatic ring is hydrogenated, and
(ab) at least one coating film modifier selected from the group consisting of a petroleum resin, a xylene resin, a coumarone resin, a terpene phenol resin and a vinyl chloride-based copolymer; and
wherein in 100 parts by weight of the main agent (A) the epoxy resin (a1) is contained as a solid in an amount of 5 to 50 parts by weight, the reactive diluent (a2-1) is contained in an amount of 0 to 20 parts by weight, the epoxy resin (a2-2) is contained as a solid in an amount of 0 to 50 parts by weight, the coating film modifier (ab) is contained in an amount of 0 to 10 parts by weight, and the polymerizable (meth)acrylate monomer (a3) is contained in an amount of 0.2 to 5 parts by weight.

2. The high-solids anticorrosive coating composition as claimed in claim 1, wherein the additive (a2) or the coating film modifier (ab) is contained in the main agent component (A), or the additive (a2) is contained in the main agent component (A) and the coating film modifier (ab) is contained in the curing agent component (B).

3. The high-solids anticorrosive coating composition as claimed in claim 1 or 2, wherein a low-boiling point solvent having a boiling point of not higher than 150°C at atmospheric pressure is not substantially contained in the paint composition.

4. The high-solids anticorrosive coating composition as claimed in claim 3, wherein the main agent component (A) and/or the curing agent component (B) contains a high-boiling point solvent having a boiling point of higher than 150°C at atmospheric pressure.

5. The high-solids anticorrosive coating composition as claimed in any one of claims 1 to 4, wherein the solids content of the coating film-forming component in the anticorrosive coating composition is in the range of 72 to 100% by volume.

6. The high-solids anticorrosive coating composition as claimed in claim 1 or 2, wherein the solids content of the coating film-forming component in the anticorrosive coating composition is in the range of 75 to 85% by volume.

7. The high-solids anticorrosive coating composition as claimed in any one of claims 1 to 4, wherein the main agent component (A) further contains at least one filler selected from the group consisting of barium sulfate, potash feldspar and titanium white.

8. The high-solids anticorrosive coating composition as claimed in any one of claims 1 to 4, wherein the main agent component (A) further contains talc.

9. The high-solids anticorrosive coating composition as claimed in any one of claims 1 to 4, wherein the epoxy resin (a1) is at least one resin selected from the group consisting of a bisphenol A type epoxy resin, a bisphenol AD type epoxy resin and a bisphenol F type epoxy resin.

10. The high-solids anticorrosive coating composition as claimed in any one of claims 1 to 4, wherein the reactive diluent (a2-1) having an epoxy group is at least one substance selected from the group consisting of phenyl glycidyl ether, alkyl glycidyl ether, glycidyl ester of versatic acid, a-olefin epoxide, 1,6-hexanediol diglycidyl ether, neopentyl glycol diglycidyl ether, trimethylolpropane triglycidyl ether and alkylphenyl glycidyl ether.

11. The high-solids anticorrosive coating composition as claimed in any one of claims 1 to 4, wherein the polymerizable (meth)acrylate monomer (a3) is a monofunctional or polyfunctional aliphatic (meth)acrylate monomer and/or a monofunctional or polyfunctional aromatic (meth)acrylate monomer.

12. A primer composition comprising the high-solids anticorrosive coating composition of claim 1 or 2.

13. The high-solids rapid-curing anticorrosive coating composition as claimed in claim 3 or 4, which is capable of forming a coating film having a curing time of not more than 8 hours and has a pot life of 10 minutes to 40 minutes as determined by test methods (1) and (2) of the description in accordance with JIS k-5600 3-3 and JIS K-5600 2-6.

14. A method for painting the exterior of a ship, comprising:
applying the high-solids anticorrosive coating composition of claim 1 or 2 as a primer onto
(i) a bottom of a ship,
(i) a bottom and (ii) a boot topping of a ship, or
the whole of an outside plating of a ship including (i) a bottom, (ii) a boot topping and (iii) an outside board, and
then applying an organotin-free hydrolyzable antifouling paint onto the primer coating film formed on the bottom (i) or the bottom (i) and the boot topping (ii).

15. The method for painting the exterior of a ship as claimed in claim 14, wherein
the high-solids anticorrosive coating composition of claim 1 or 2 is applied as a primer onto the whole of an outside plating of a ship including (i) a bottom, (ii) a boot topping and (iii) an outside board,
then applying an organotin-free hydrolyzable antifouling paint onto the primer coating film formed on the bottom (i) or the bottom (i) and the boot topping (ii) of the primer treated outside plating and applying a finish coating for outside board onto the outside board (iii), and
if necessary, further applying a finish coating for boot topping onto the boot topping (ii).

16. The painting method as claimed in claim 15, wherein the finish coating for outside board is at least one coating selected from a urethane-based coating, an epoxy-based coating, an acrylic-based coating and a chlorinated po4yolefin-based coating, and the finish coating for boot topping is at least one coating selected from a urethane-based coating, an epoxy-based coating, an acrylic-based coating, a chlorinated polyolefin-based coating and an organotin-free hydrolyzable antifouling paint.

17. The painting method as claimed in any one of claims 14 to 16, wherein the organotin-free hydrolyzable antifouling paint contains a trialkylsilyl ester copolymer containing constituent units derived from trialkylsilyl ester of a polymerizable unsaturated carboxylic acid in amounts of 10 to 65% by weight and having a number-average molecular weight (Mn) of 1000 to 50000.

18. The painting method as claimed in any one of claims 14 to 17, wherein the organotin-free hydrolyzable antifouling paint contains a vinyl-based resin in which an organic acid is bonded to at least one side chain end through an intermolecular bond owing to a metal ion (metal salt bond).

19. The method for painting the exterior of a ship as claimed in claim 15, which further comprises applying the high-solids anticorrosive coating composition of claim 1 or 2 as a primer onto the whole of an exposed area of a ship present on the upper side of a deck and constituted of (iv) a deck and (v) a superstructure,
and applying a finish coating for deck onto the deck (iv).

20. The painting method as claimed in claim 19, which further comprises applying a finish coating for superstructure onto the superstructure (v).

21. The painting method as claimed in claim 19, wherein the finish coating for deck is at least one coating selected from a urethane-based coating, an epoxy-based coating, an acrylic-based coating and a chlorinated polyolefin-based coating.

22. The painting method as claimed in claim 20, wherein the finish coating for superstructure is at least one coating selected from a urethane-based coating, an epoxy-based coating, an acrylic-based coating and a chlorinated polyolefin-based coating.

23. The painting method as claimed in claim 19, wherein the organotin-free hydrolyzable antifouling paint is an organotin-free hydrolyzable antifouling paint containing, as a binder component, at least one hydrolyzable resin selected from the group consisting of (i) a trialkylsilyl ester copolymer, (ii) a resin in which an organic acid is bonded to at least one side chain end of a vinyl-based resin through an intermolecular bond owing to a metal ion (metal salt bond), and (iii) an unsaturated carboxylic acid metal salt-based copolymer.

24. The painting method as claimed in claim 23, wherein the trialkylsilyl ester copolymer (i) contained in the organotin-free hydrolyzable antifouling paint contains constituent units derived from trialkylsilyl ester of a polymerizable unsaturated carboxylic acid in amounts of 10 to 65% by weight and has a number-average molecular weight (Mn) of 1000 to 50000.

25. A painting method with a high-solids rapid-curing anticorrosive coating composition, comprising forcedly feeding the main agent component (A) and the curing agent component (B) for constituting the high-solids rapid-curing anticorrosive coating composition of claim 3 or 4 to a static mixer through different feed pipes, mixing them, then guiding the resulting high-solids rapid-curing anticorrosive coating composition to a spray gun and coating a base surface with the composition.

26. A high-solids anticorrosive coating film formed from the high-solids anticorrosive coating composition of claim 1 or 2.

27. A high-solids rapid-cured anticorrosive coating film formed from the high-solids rapid-curing anticorrosive coating composition of claim 3 or 4.

28. A painted ship coated with a high-solids anticorrosive coating film formed from the high-solids anticorrosive coating composition of claim 1 or 2.

29. A painted ship coated with a coating film formed by the method for painting the exterior of a ship of any one of claims 14, 15, 19 or 20.

30. An exposed deck, a cargo tank or a ballast tank of a ship, which is coated with a high-solids anticorrosive coating film formed from the high-solids anticorrosive coating composition of claim 1 or 2 or a high-solids rapid-cured anticorrosive coating film formed from the high-solids rapid-curing anticorrosive coating composition of claim 3 or 4.

31. An underwater structure coated with a high-solids anticorrosive coating film formed from the high-solids anticorrosive coating composition of claim 1 or 2.

32. An underwater structure coated with a high-solids rapid-cured anticorrosive coating film formed from the high-solids rapid-curing anticorrosive coating composition of claim 3 or 4.

33. A high-solids anticorrosive coating composition set comprising:
a unit comprising the main agent component of claim 1 or 2, and
a unit comprising the curing agent component of claim 1 or 2 corresponding to the unit comprising the main agent component.

## Patentansprüche

1. Bei niederer Temperatur härtende, feststoffreiche Antikorrosions-Beschichtungszusammensetzung, umfassend:
(A) eine Hauptkomponente, die
(a1) ein Epoxyharz und
(a3) ein polymerisierbares (Meth)acrylatmonomer umfasst, und
(B) eine Härterkomponente, die
(b1) ein Addukt von Norbornandiamin mit einem Epoxyharz
umfasst,
wobei die Hauptkomponente (A) und/oder die Härterkomponente (B) zumindest das nachstehende Additiv (a2) und den nachstehenden Filmbeschichtungsmodifikator (ab) umfasst:
(a2) zumindest ein Additiv, ausgewählt aus der Gruppe bestehend aus
(a2-1) einem reaktiven Verdünnungsmittel, das eine Epoxygruppe aufweist, und
(a2-2) einem Dimersäure-modifizierten Epoxyharz und/oder einem Epoxyharz, in dem ein aromatischer Ring hydriert ist, und
(ab) zumindest einen Filmbeschichtungsmodifikator, ausgewählt aus der Gruppe bestehend aus einem Petroleumharz, einem Xylolharz, einem Cumaronharz, einem Terpenphenolharz und einem Vinylchlorid-basierten Copolymer; und
wobei in 100 Gew.-Teilen der Hauptkomponente (A) das Epoxyharz (a1) als Feststoff in einer Menge von 5 bis 50 Gew.-Teilen enthalten ist, das reaktive Verdünnungsmittel (a2-1) in einer Menge von 0 bis 20 Gew.-Teilen enthalten ist, das Epoxyharz (a2-2) als Feststoff in einer Menge von 0 bis 50 Gew.-Teilen enthalten ist, der Filmbeschichtungsmodifikator (ab) in einer Menge von 0 bis 10 Gew.-Teilen enthalten ist, und das polymerisierbare (Meth)acrylatmonomer (a3) in einer Menge von 0,2 bis 5 Gew.-Teilen enthalten ist.

2. Feststoffreiche Antikorrosions-Beschichtungszusammensetzung gemäss Anspruch 1, wobei das Additiv (a2) oder der Filmbeschichtungsmodifikator (ab) in der Hauptkomponente (A) enthalten ist oder das Additiv (a2) in der Hauptkomponente (A) und der Filmbeschichtungsmodifikator (ab) in der Härterkomponente (B) enthalten ist.

3. Feststoffreiche Antikorrosions-Beschichtungszusammensetzung gemäss Anspruch 1 oder 2, wobei ein niedrigsiedendes Lösungsmittel mit einem Siedepunkt von nicht mehr als 150°C bei Atmosphärendruck in der Anstrichzusammensetzung im wesentlichen nicht enthalten ist.

4. Feststoffreiche Antikorrosions-Beschichtungszusammensetzung gemäss Anspruch 3, wobei die Hauptkomponente (A) und/oder die Härterkomponente (B) ein hochsiedendes Lösungsmittel mit einem Siedepunkt von mehr als 150°C bei Atmosphärendruck enthält.

5. Feststoffreiche Antikorrosions-Beschichtungszusammensetzung gemäss irgendeinem der Ansprüche 1 bis 4, wobei der Feststoffgehalt der filmbeschichtungsbildenden Komponente in der Antikorrosions-Beschichtungszusammensetzung im Bereich von 72 bis 100 Vol.% liegt.

6. Feststoffreiche Antikorrosions-Beschichtungszusammensetzung gemäss Anspruch 1 oder 2, wobei der Feststoffgehalt der filmbeschichtungsbildenden Komponente in der Antikorrosions-Beschichtungszusammensetzung im Bereich von 75 bis 85 Vol.% liegt.

7. Feststoffreiche Antikorrosions-Beschichtungszusammensetzung gemäss irgendeinem der Ansprüche 1 bis 4, wobei die Hauptkomponente (A) ferner zumindest einen Füllstoff, ausgewählt aus der Gruppe bestehend aus Bariumsulfat, Pottasche, Feldspat und Titanweiss, enthält.

8. Feststoffreiche Antikorrosions-Beschichtungszusammensetzung gemäss irgendeinem der Ansprüche 1 bis 4, wobei die Hauptkomponente (A) ferner Talk enthält.

9. Feststoffreiche Antikorrosions-Beschichtungszusammensetzung gemäss irgendeinem der Ansprüche 1 bis 4, wobei das Epoxyharz (a1) zumindest ein Harz, ausgewählt aus der Gruppe bestehend aus einem Epoxyharz vom Bisphenol A-Typ, einem Epoxyharz vom Bisphenol AD-Typ und einem Epoxyharz vom Bisphenol F-Typ, ist.

10. Feststoffreiche Antikorrosions-Beschichtungszusammensetzung gemäss irgendeinem der Ansprüche 1 bis 4, wobei das reaktive Verdünnungsmittel (a2-1), das eine Epoxygruppe aufweist, zumindest eine Substanz, ausgewählt aus der Gruppe bestehend aus Phenylglycidylether, Alkylglycidylether, Versatisäureglycidylester, α-Olefinepoxid, 1,6-Hexandioldiglycidylether, Neopentylglykol-diglycidylether, Trimethylpropan-triglycidylether und Alkylphenylglycidylether, ist.

11. Feststoffreiche Antikorrosions-Beschichtungszusammensetzung gemäss mindestens einem der Ansprüche 1 bis 4, wobei das polymerisierbare (Meth)acrylatmonomer (a3) ein monofunktionelles oder polyfunktionelles, aliphatisches (Meth)acrylatmonomer und/oder ein monofunktionelles oder polyfunktionelles, aromatisches (Meth)acrylatmonomer ist.

12. Grundierungszusammensetzung, die die feststoffreiche Antikorrosions-Beschichtungszusammensetzung gemäss Anspruch 1 oder 2 umfasst.

13. Feststoffreiche, schnell härtende Antikorrosions-Beschichtungszusammensetzung gemäss Anspruch 3 oder 4, die in der Lage ist, eine Filmbeschichtung mit einer Aushärtungszeit von nicht mehr als 8 Stunden zu bilden und eine Topfzeit von 10 bis 40 Minuten aufweist, wie durch die Testverfahren (1) und (2) der Beschreibung gemäss JIS K-5600 3-3 und JIS K-5600 2-6 bestimmt.

14. Verfahren zum Anstreichen des Äusseren eines Schiffes, umfassend:
Aufbringen der feststoffreichen Antikorrosions-Beschichtungszusammensetzung gemäss Anspruch 1 oder 2 als Grundierung auf
(i) einer Unterseite eines Schiffes,
(i) einer Unterseite und (ii) einem Wasserpass eines Schiffes, oder
der gesamten Verkleidung eines Schiffes, einschliesslich (i) einer Unterseite, (ii) einem Wasserpass und (iii) einem Aussenbord, und
anschliessend Aufbringen eines organozinnfreien, hydrolysierbaren Antifouling-Anstrichs auf die Filmbeschichtungsgrundierung, die auf der Unterseite (i) oder der Unterseite (i) und dem Wasserpass (ii) gebildet ist.

15. Verfahren zum Anstreichen des Äusseren eines Schiffes gemäss Anspruch 14, wobei
die feststoffreiche Antikorrosions-Beschichtungszusammensetzung gemäss Anspruch 1 oder 2 als Grundierung auf der gesamten äusseren Verkleidung eines Schiffes, einschliesslich (i) einer Unterseite, (ii) einem Wasserpass und (iii) einem Aussenbord, aufgebracht wird,
anschliessend Aufbringen eines organozinnfreien, hydrolysierbaren Antifouling-Anstrichs auf die Filmbeschichtungsgrundierung, die auf der Unterseite (i) oder der Unterseite (i) und dem Wasserpass (ii) der mit Grundierung behandelten äusseren Verkleidung gebildet ist, und Aufbringen einer
Abschlussbeschichtung für das Aussenbord auf dem Aussenbord (iii), und
falls nötig, weiteres Aufbringen einer Abschlussbeschichtung für den Wasserpass auf den Wasserpass (ii).

16. Anstrichverfahren gemäss Anspruch 15, wobei die Anschlussbeschichtung für das Aussenbord zumindest eine Beschichtung ist, die aus einer Urethan-basierten Beschichtung, einer Epoxy-basierten Beschichtung, einer Acryl-basierten Beschichtung und einer chlorierten Polyolefin-basierten Beschichtung ausgewählt ist, und die Abschlussbeschichtung für den Wasserpass zumindest eine Beschichtung ist, die aus einer Urethan-basierten Beschichtung, einer Epoxy-basierten Beschichtung, einer Acryl-basierten Beschichtung, einer chlorierten Polyolefin-basierten Beschichtung und einem organozinnfreien, hydrolysierbaren Antifouling-Anstrich ausgewählt ist.

17. Anstrichverfahren gemäss irgendeinem der Ansprüche 14 bis 16, wobei der organozinnfreie, hydrolysierbare Antifouling-Anstrich ein Trialkylsilylester-Copolymer enthält, das Aufbaueinheiten, die von einem Trialkylsilylester einer polymerisierbaren, ungesättigten Carbonsäure abgeleitet sind, in einer Menge von 10 bis 65 Gew.% enthält und ein zahlengemitteltes Molekulargewicht (Mn) von 1.000 bis 50.000 aufweist.

18. Anstrichverfahren gemäss irgendeinem der Ansprüche 14 bis 17, wobei der organozinnfreie, hydrolysierbare Antifouling-Anstrich ein Vinyl-basiertes Harz enthält, in dem eine organische Säure durch eine intermolekulare Metallionenbindung (Metallsalzbindung) an mindestens ein Seitenkettenende gebunden ist.

19. Verfahren zum Anstreichen des Äusseren eines Schiffes gemäss Anspruch 15, das ferner das Aufbringen der feststoffreichen Antikorrosions-Beschichtungszusammensetzung gemäss Anspruch 1 oder 2 als Grundierung auf dem gesamten exponierten Bereich der Deckoberseite eines Schiffes umfasst, die aus (iv) einem Deck und (v) einem Aufbau besteht, und Aufbringen einer Abschlussbeschichtung für das Deck auf dem Deck (iv).

20. Anstrichverfahren gemäss Anspruch 19, das ferner das Aufbringen einer Abschlussbeschichtung für den Aufbau auf den Aufbau (v) umfasst.

21. Anstrichverfahren gemäss Anspruch 19, wobei die Abschlussbeschichtung für das Deck zumindest eine Beschichtung ist, die aus einer Urethan-basierten Beschichtung, einer Epoxy-basierten Beschichtung, einer Acryl-basierten Beschichtung und einer chlorierten Polyolefin-basierten Beschichtung ausgewählt ist.

22. Anstrichverfahren gemäss Anspruch 20, wobei die Abschlussbeschichtung für den Aufbau zumindest eine Beschichtung ist, die aus einer Urethan-basierten Beschichtung, einer Epoxy-basierten Beschichtung, einer Acryl-basierten Beschichtung und einer chlorierten Polyolefin-basierten Beschichtung ausgewählt ist.

23. Anstrichverfahren gemäss Anspruch 19, wobei der organozinnfreie, hydrolysierbare Antifouling-Anstrich ein organozinnfreier, hydrolysierbarer Antifouling-Anstrich ist, der als Bindemittelkomponente zumindest ein hydrolysierbares Harz enthält, das aus der Gruppe bestehend aus (i) einem Trialkylsilylester-Copolymer, (ii) einem Harz, in dem eine organische Säure durch eine intermolekulare Metallionenbindung (Metallsalzbindung) an zumindest ein Seitenkettenende eines Vinyl-basierten Harzes gebunden ist, und (iii) einem ungesättigten Carbonsäuremetallsalz-basierten Copolymer ausgewählt ist.

24. Anstrichverfahren gemäss Anspruch 23, wobei das Trialkylsilylester-Copolymer (i), das in dem organozinnfreien, hydrolysierbaren Antifouling-Anstrich enthalten ist, Aufbaueinheiten, die von einem Trialkylsilylester einer polymerisierbaren, ungesättigten Carbonsäure abgeleitet sind, in einer Menge von 10 bis 65 Gew.% enthält, und ein zahlengemitteltes Molekulargewicht (Mn) von 1.000 bis 50.000 aufweist.

25. Anstrichverfahren mit einer feststoffreichen, schnell härtenden Antikorrosions-Beschichtungszusammensetzung, umfassend die zwangsweise Zuführung der Hauptkomponente (A) und der Härterkomponente (B) zur Bildung der feststoffreichen, schnell härtenden Antikorrosions-Beschichtungszusammensetzung gemäss Anspruch 3 oder 4 in einen statischen Mischer durch unterschiedliche Beschickungsrohre, Mischen und dann Zuführen der erhaltenen feststoffreichen, schnell härtenden Antikorrosions-Beschichtungszusammensetzung zu einer Sprühpistole und Beschichten einer Grundoberfläche mit der Zusammensetzung.

26. Feststoffreicher Antikorrosions-Beschichtungsfilm, der aus der feststoffreichen Antikorrosions-Beschichtungszusammensetzung gemäss Anspruch 1 oder 2 gebildet ist.

27. Feststoffreicher, schnell härtender Antikorrosions-Beschichtungsfilm, der aus der feststoffreichen, schnell härtenden Antikorrosions-Beschichtungszusammensetzung gemäss Anspruch 3 oder 4 gebildet ist.

28. Angestrichenes Schiff, das mit einem feststoffreichen Antikorrosions-Beschichtungsfilm, der aus der feststoffreichen Antikorrosions-Beschichtungszusammensetzung gemäss Anspruch 1 oder 2 gebildet ist, beschichtet ist.

29. Angestrichenes Schiff, das mit einem Beschichtungsfilm, der durch das Verfahren zum Anstreichen des Äusseren eines Schiffes gemäss irgendeinem der Ansprüche 14, 15, 19 oder 20 gebildet ist, beschichtet ist.

30. Exponierte(s/r) Deck, Cargotank oder Ballasttank eines Schiffes, das/der mit einem feststoffreichen Antikorrosions-Beschichtungsfilm, der aus der feststoffreichen Antikorrosions-Beschichtungszusammensetzung gemäss Anspruch 1 oder 2 oder einem feststoffreichen, schnell härtenden Antikorrosions-Beschichtungsfilm, der aus der feststoffreichen, schnell härtenden Antikorrosions-Beschichtungszusammensetzung gemäss Anspruch 3 oder 4 gebildet ist, beschichtet ist.

31. Unterwasserstruktur, die mit einem feststoffreichen Antikorrosions-Beschichtungsfilm, der aus der feststoffreichen Antikorrosions-Beschichtungszusammensetzung gemäss Anspruch 1 oder 2 gebildet ist, beschichtet ist.

32. Unterwasserstruktur, die mit einem feststoffreichen, schnell härtenden Antikorrosions-Beschichtungsfilm, der aus der feststoffreichen, schnell härtenden Antikorrosions-Beschichtungszusammensetzung gemäss Anspruch 3 oder 4 gebildet ist, beschichtet ist.

33. Schnell härtendes Antikorrosions-Beschichtungszusammensetzungsset, umfassend:
eine Einheit, die die Hauptkomponente gemäss Anspruch 1 oder 2 umfasst, und
eine Einheit, die die Härterkomponente gemäss Anspruch 1 oder 2 entsprechend der die Hauptkomponenten umfassenden Einheit umfasst.

## Revendications

1. Composition de revêtement anticorrosion à haute teneur en solides durcissant à basse température comprenant :
(A) un composant d'agent principal comprenant
(a1) une résine époxy et
(a3) un monomère (méth)acrylate polymérisable et
(B) un composant d'agent durcissant comprenant
(b1) un adduit de la norbornanediamine avec une résine époxy, ou
le composant d'agent principal (A) et/ou le composant d'agent durcissant (B) comprenant au moins un élément parmi l'additif (a2) et l'agent modificateur de film de revêtement (ab) suivants :
(a2) au moins un additif choisi dans le groupe comprenant
(a2-1) un diluant réactif ayant un groupe époxy et
(a2-2) une résine époxy modifiée par un acide dimère et/ou une résine époxy dans laquelle un cycle aromatique est hydrogéné, et
(ab) au moins un agent modificateur de film de revêtement choisi dans le groupe comprenant une résine de pétrole, une résine de xylène, une résine de coumarone, une résine terpène phénolique et un copolymère à base de chlorure de vinyle, et
dans laquelle composition pour 100 parties en poids de l'agent principal (A), la résine epoxy (a1) se présente sous la forme d'un solide à hauteur de 5 à 50 parties en poids, le diluant réactif (a2-1) représente une quantité comprise entre 0 et 20 parties en poids, la résine epoxy (a2-2) se présente sous la forme d'un solide à hauteur de 0 à 50 parties en poids, l'agent modificateur de film de revêtement (ab) représente une quantité comprise entre 0 et 10 parties en poids, et le monomère (méth)acrylate polymérisable (a3) représente une quantité comprise entre 0,2 et 5 parties en poids.

2. Composition de revêtement anticorrosion à haute teneur en solides selon la revendication 1, dans laquelle l'additif (a2) ou l'agent modificateur de film de revêtement (ab) est contenu dans le composant d'agent principal (A), ou l'additif (a2) est contenu dans le composant d'agent principal (A) et l'agent modificateur de film de revêtement (ab) est contenu dans le composant d'agent durcissant (B).

3. Composition de revêtement anticorrosion à haute teneur en solides selon la revendication 1 ou 2, dans laquelle un solvant à bas point d'ébullition ayant un poids d'ébullition ne dépassant pas 150 °C à la pression atmosphérique, n'est pas substantiellement contenu dans la composition de peinture.

4. Composition de revêtement anticorrosion à haute teneur en solides selon la revendication 3, dans laquelle le composant d'agent principal (A) et/ou le composant d'agent durcissant (B) contient un solvant à haut point d'ébullition ayant un point d'ébullition supérieur à 150 °C à la pression atmosphérique.

5. Composition de revêtement anticorrosion à haute teneur en solides selon l'une quelconque des revendications 1 à 4, dans laquelle la teneur en solides du composant filmogène de revêtement dans la composition de revêtement anticorrosion est de l'ordre de 72 à 100 % en volume.

6. Composition de revêtement anticorrosion à haute teneur en solides selon la revendication 1 ou 2, dans laquelle la teneur en solides du composant filmogène de revêtement dans la composition de revêtement anticorrosion est de l'ordre de 75 à 85 % en volume.

7. Composition de revêtement anticorrosion à haute teneur en solides selon l'une quelconque des revendications 1 à 4, dans laquelle le composant d'agent principal (A) contient en outre au moins un agent de charge choisi dans le groupe comprenant le sulfate de baryum, le feldspath potassique et le blanc de titane.

8. Composition de revêtement anticorrosion à haute teneur en solides selon l'une quelconque des revendications 1 à 4, dans laquelle le composant d'agent principal (A) contient en outre du talc.

9. Composition de revêtement anticorrosion à haute teneur en solides selon l'une quelconque des revendications 1 à 4, dans laquelle la résine époxy (a1) est au moins une résine choisie dans le groupe comprenant une résine époxy de type bisphénol A, une résine époxy de type bisphénol AD et une résine époxy de type bisphénol F.

10. Composition de revêtement anticorrosion à haute teneur en solides selon l'une quelconque des revendications 1 à 4, dans laquelle le diluant réactif (a2-1) ayant un groupe époxy est au moins une substance choisie dans le groupe comprenant le phényl-glycidyl-éther, l'alkyl-glycidyl-éther, le glycidyl-ester d'acide versatique, l'époxyde d'α-oléfine, le 1,6-hexanediol diglycidyl-éther, le néopentyl-glycol diglycidyléther, le triméthylolpropane triglycidyléther et l'alkylphényl-glycidyléther.

11. Composition de revêtement anticorrosion à haute teneur en solides selon l'une quelconque des revendications 1 à 4, dans laquelle le monomère de (méth)acrylate polymérisable (a3) est un monomère (méth)acrylate aliphatique mono fonctionnel ou polyfonctionnel et/ou un monomère (méth)acrylate aromatique monofonctionnel ou polyfonctionnel.

12. Composition de couche primaire comprenant la composition de revêtement anticorrosion à haute teneur en solides selon la revendication 1 ou 2.

13. Composition de revêtement anticorrosion à durcissement rapide, à haute teneur en solides, selon l'une quelconque des revendications 3 ou 4, qui est capable de former un film de revêtement ayant un temps de durcissement ne dépassant pas 8 heures et une durée de vie en pot de 10 minutes à 40 minutes déterminée par les procédés de test (1) et (2) de la description selon normes JIS K-5600 3-3 et JIS K-5600 2-6.

14. Procédé de revêtement de l'extérieur d'un navire, comprenant :
l'application de la composition de revêtement anticorrosion à haute teneur en solides selon la revendication 1 ou 2 comme couche primaire sur
(i) le fond d'un navire,
(i) le fond et (ii) l'exposant de charge d'un navire, ou la totalité du bordé extérieur d'un navire comprenant (i) un fond, (ii) un exposant de charge et (iii) un bord extérieur, puis
l'application d'une peinture anti-salissure hydrolysable dépourvue d'organo-étain sur le film de revêtement de couche primaire formé sur le fond (i) ou sur le fond (i) et l'exposant de charge (ii).

15. Procédé de revêtement de l'extérieur d'un navire selon la revendication 14, dans lequel
la composition de revêtement anti-corrosion à haute teneur en solides de la revendication 1 ou 2 est appliquée comme couche primaire sur la totalité d'un bordé extérieur d'un navire comprenant (i) un fond, (ii) un exposant de charge et (iii) un bord extérieur,
puis l'application d'une peinture anti-salissure hydrolysable dépourvue d'organo-étain sur le film de revêtement de couche primaire formé sur le fond (i) ou sur le fond (i) et l'exposant de charge (ii) du bordé extérieur traité par la couche primaire et l'application d'un revêtement de finition pour le bord extérieur sur le bord extérieur (iii), et
si nécessaire, en outre, l'application d'un revêtement de finition pour l'exposant de charge sur l'exposant de charge (ii).

16. Procédé de revêtement selon la revendication 15, dans lequel le revêtement de finition pour le bord extérieur est au moins un revêtement choisi parmi un revêtement à base d'uréthane, un revêtement à base époxy, un revêtement à base acrylique et un revêtement à base de polyoléfine chloré et le revêtement de finition pour l'exposant de charge est au moins un revêtement choisi parmi un revêtement à base d'uréthane, un revêtement à base époxy, un revêtement à base acrylique et un revêtement à base de polyoléfine chloré et une peinture anti-salissure hydrolysable dépourvue d'organo-étain.

17. Procédé de revêtement selon l'une quelconque des revendications 14 à 16, dans lequel la peinture anti-salissure hydrolysable dépourvue d'organo-étain contient un copolymère de trialkylsilyl-ester contenant des motifs de constituants dérivés de trialkylsilyl-ester d'un acide carboxylique insaturé polymérisable en quantité de 10 à 65 % en poids et ayant un poids moléculaire moyen en nombre (Mn) de 1 000 à 50 000.

18. Procédé de revêtement selon l'une quelconque des revendications 14 à 17, dans lequel la peinture anti-salissure hydrolysable dépourvue d'organo-étain contient une résine à base de vinyle dans laquelle un acide organique est lié à au moins une extrémité de chaîne latérale par une liaison intermoléculaire due à un ion métal (liaison par sel métallique).

19. Procédé de revêtement de l'extérieur d'un navire selon la revendication 15, qui comprend en outre l'application de la composition de revêtement anti-corrosion à haute teneur en solides selon la revendication 1 ou 2 comme couche primaire sur la totalité d'une zone exposée d'un navire présente sur le côté supérieur d'un pont et constitué de (iv) un pont et (v) une superstructure,
puis d'application d'un revêtement de finition pour le pont sur le pont (iv).

20. Procédé de revêtement selon la revendication 19, qui comprend en outre l'application d'un revêtement de finition pour superstructure sur la superstructure (v).

21. Procédé de revêtement selon la revendication 19, dans lequel le revêtement de finition pour le pont est au moins un revêtement choisi parmi un revêtement à base d'uréthane, un revêtement à base époxy, un revêtement à base acrylique et un revêtement à base de polyoléfine chlorée.

22. Procédé de revêtement selon la revendication 20, dans lequel le revêtement de finition pour superstructure est au moins un revêtement choisi parmi un revêtement à base d'uréthane, un revêtement à base époxy, un revêtement à base acrylique et un revêtement à base de polyoléfine chlorée.

23. Procédé de revêtement selon la revendication 19, dans lequel la peinture anti-salissure hydrolysable dépourvue d'organo-étain est une peinture anti-salissure hydrolysable dépourvue d'organo-étain contenant, comme composant liant, au moins une résine hydrolysable choisie dans le groupe comprenant (i) un copolymère de trialkylsilyl-ester, (ii) une résine dans laquelle un acide organique est lié à au moins une extrémité de chaîne latérale d'une résine à base vinylique par une liaison intermoléculaire due à un ion métallique (liaison de sel métallique), et (iii) un copolymère à base de sel métallique d'acide carboxylique insaturé.

24. Procédé de revêtement selon la revendication 23, dans lequel le copolymère de trialkylsilyl-ester (i) contenu dans la peinture anti-salissure hydrolysable dépourvue d'organo-étain contient des motifs constituants dérivés de trialkylsilyl-ester d'un acide carboxylique insaturé polymérisable en quantités de 10 à 65 % en poids et a un poids moléculaire moyen en nombre (Mn) de 1 000 à 50 000.

25. Procédé de revêtement avec une composition de revêtement anti-corrosion à durcissement rapide à teneur élevée en solides, comprenant l'acheminement forcé du composant de l'agent principal (A) et du composant d'agent durcissant (B) pour constituer la composition de revêtement anti-corrosion à durcissement rapide, à haute teneur en solides selon la revendication 3 ou 4 dans un mélangeur statique par différents tuyaux d'alimentation, leur mélange puis le guidage de la composition de revêtement anti-corrosion à durcissement rapide, à haute teneur en solides, dans un pistolet de pulvérisation et le revêtement d'une surface de base avec la composition.

26. Film de revêtement anti-corrosion à haute teneur en solides formé à partir de la composition de revêtement anti-corrosion à haute teneur en solides selon la revendication 1 ou 2.

27. Film de revêtement anti-corrosion à durcissement rapide, à haute teneur en solides, formé à partir de la composition de revêtement anti-corrosion, à durcissement rapide, à haute teneur en solides selon la revendication 3 ou 4.

28. Navire peint revêtu du film de revêtement anti-corrosion à haute teneur en solides formé à partir de la composition de revêtement anti-corrosion à haute teneur en solides selon la revendication 1 ou 2.

29. Navire peint revêtu du film de revêtement formé par le procédé de revêtement de l'extérieur d'un navire selon l'une quelconque des revendications 14, 15, 19 ou 20.

30. Pont exposé, citerne de cargaison ou citerne à ballast d'un navire, qui est revêtu d'un film de revêtement anti-corrosion à haute teneur en solides formé à partir de la composition de revêtement anti-corrosion à haute teneur en solides selon la revendication 1 ou 2, ou un film de revêtement anti-corrosion à durcissement rapide, à haute teneur en solides formé à partir de la composition de revêtement anti-corrosion à durcissement rapide, à haute teneur en solides selon la revendication 3 ou 4.

31. Structure sous-marine revêtue d'un film de revêtement anti-corrosion à haute teneur en solides formé à partir de la composition de revêtement anti-corrosion à haute teneur en solides selon la revendication 1 ou 2.

32. Structure sous-marine revêtue d'un film de revêtement anti-corrosion à durcissement rapide, à haute teneur en solides, formé à partir de la composition de revêtement anti-corrosion à durcissement rapide, à haute teneur en solides, selon la revendication 3 ou 4.

33. Ensemble de composition de revêtement anti-corrosion à haute teneur en solides comprenant :
une unité comprenant le composant d'agent principal selon la revendication 1 ou 2, et
une unité comprenant le composant d'agent durcissant selon la revendication 1 ou 2, correspondant à l'unité comprenant le composant d'agent principal.
